(19) Europäisches Patentamt / European Patent Office / Office européen des brevets

(11) **EP 4 462 892 B1**

(12) **EUROPEAN PATENT SPECIFICATION**

(45) Date of publication and mention
of the grant of the patent:
**29.10.2025 Bulletin 2025/44**

(21) Application number: **24174772.4**

(22) Date of filing: **08.05.2024**

(51) International Patent Classification (IPC):
*H04W 52/36* (2009.01)     *H04L 5/00* (2006.01)
*H04W 52/50* (2009.01)     *H04W 52/14* (2009.01)
*H04W 74/00* (2009.01)     *H04W 74/08* (2024.01)

(52) Cooperative Patent Classification (CPC):
**H04W 52/362; H04W 52/50; H04W 74/0833;**
H04L 5/0048; H04L 5/0051; H04L 5/0053;
H04W 52/146; H04W 74/004; H04W 74/0866

(54) **IMPROVED PHYSICAL DOWNLINK CONTROL CHANNEL (PDCCH) ORDERED PHYSICAL RANDOM-ACCESS CHANNEL (PRACH) TRANSMISSION IN LOWER-LAYER TRIGGERED MOBILITY (LTM)**

GEORDNETE PHYSIKALISCHE DIREKTZUGRIFFSKANAL (PRACH)-ÜBERTRAGUNG IN EINER UNTEREN SCHICHTGESTEUERTEN MOBILITÄT (LTM)

TRANSMISSION DE CANAL PHYSIQUE D'ACCÈS ALÉATOIRE ORDONNÉ PAR LIAISON DESCENDANTE (PDCCH) ORDONNÉ PAR CANAL PHYSIQUE (PRACH) AMÉLIORÉ DANS UNE MOBILITÉ DÉCLENCHÉE PAR COUCHE INFÉRIEURE (LTM)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **11.05.2023 US 202318316144**

(43) Date of publication of application:
**13.11.2024 Bulletin 2024/46**

(73) Proprietor: **Nokia Technologies Oy
02610 Espoo (FI)**

(72) Inventors:
• **KOSKELA, Timo**
**Oulu (FI)**
• **GOYAL, Sanjay**
**Denville, New Jersey (US)**
• **KARIMIDEHKORDI, Ali**
**Munich (DE)**
• **AWADA, Ahmad**
**Munich (DE)**
• **KARABULUT, Umur**
**Munich (DE)**
• **KAKKAVAS, Anastasios**
**Munich (DE)**
• **SPAPIS, Panagiotis**
**Munich (DE)**

(74) Representative: **Cohausz & Florack
Patent- & Rechtsanwälte
Partnerschaftsgesellschaft mbB
Bleichstraße 14
40211 Düsseldorf (DE)**

(56) References cited:
**US-A1- 2015 271 854**

• PATRICK MERIAS ET AL: "Moderator summary on Timing advance management for LTM: Round 4", vol. 3GPP RAN 1, no. Online; 20230417 - 20230426, 25 April 2023 (2023-04-25), XP052297576, Retrieved from the Internet <URL:https://www.3gpp.org/ftp/TSG_RAN/WG1_RL1/TSGR1_112b-e/Docs/R1-2304135.zip R1-2304135.docx> [retrieved on 20230425]
• XIN SU: "LS on beam indication of target cell(s) and time gap between a PDCCH order and the corresponding PRACH transmission for LTM", vol. RAN WG2, no. Incheon, Korea; 20230522 - 20230526, 8 May 2023 (2023-05-08), XP052370652, Retrieved from the Internet <URL:https://ftp.3gpp.org/tsg_ran/WG2_RL2/TSGR2_122/Docs/R2-2304620.zip R2-2304620_R1-2304276.doc> [retrieved on 20230508]

Description

## TECHNICAL FIELD

An example embodiment of the present disclosure generally relates to communication systems and, more particularly, to a user equipment (UE) power ramping procedure for PDCCH ordered PRACH transmission.

## BACKGROUND

Third generation partnership project (3GPP) 5th generation (5G) technology is a next generation of radio systems and network architecture that can deliver extreme broadband and ultra-robust, low latency connectivity. 5G technology improves a variety of telecommunication services offered to the end users and supports massive broadband that delivers gigabytes of bandwidth per second on demand for the uplink and downlink transmissions. As one example, next generation communication systems may be configured to use virtualized radio access network (RAN) functions and core network functions. As another example, next generation systems may use a Service Based Architecture (SBA), e.g., a system architecture in which the system functionality is achieved using a set of Network Functions (NFs) providing services to other NFs authorized to access their services. The 5G network may be configured to support NFs via a Network Repository Function (NRF). For example, an NRF may be configured to maintain a list of available NFs to facilitate service registration and/or discovery in an instance in which a user equipment (UE) attempts to access one or more services provided by one or more network devices.

3GPP 5G communication systems employ a vast network of RAN nodes (e.g., Next Generation Node Bs, also known as gNBs) that generate respective networking cells to service one or more pieces of user equipment (UE) (e.g., mobile computing devices such as smartphones, laptops, etc.). As a particular UE traverses a real-world environment associated with a network of RAN nodes (e.g., gNBs) it may be necessary for the UE to connect to multiple RAN nodes and, as such, the UE must be able to efficiently execute a "cell switch"-also known as a handover-from a first network cell (e.g., a source cell) associated with a first RAN node to second network cell (e.g., a target cell) associated with a second RAN node. However, various uplink (UL) and/or downlink (DL) transmission timing and/or synchronization errors between the UE and one or more RAN nodes may occur during the cell switch. It is therefore desirable to have improved methods for efficiently synchronizing the data transmissions between a UE and one or more RAN nodes associated with one or more respective networking cells of a particular 3GPP 5G communication system.

It is known from PATRICK MERIAS ET AL: "Moderator summary on Timing advance management for LTM: Round 4", 3GPP draft R1-2304135; NR_MOB_ENH2-CORE, vol. 3GPP RAN 1 that a UE transmits PRACH with power ramping for subsequent PRACH triggered by PDCCH order for the same candidate cell and the same SS/PBCH index and that UE resets the power counter when PDCCH order with different conditions is received.

It is further known from XIN SU: "LS on beam indication of target cell(s) and time gap between a PDCCH order and the corresponding PRACH transmission for LTM", 3GPP DRAFT; R2-2304620, vol. RAN WG2 to determine whether power ramping is performed or not from PDCCH order. If power ramping is performed, whether PRACH is an initial transmission or retransmission is explicitly indicated in PDCCH order (FFS exact indication mechanism); power ramping-up value is configured.

## SUMMARY

The invention is defined by the appended independent claims. Dependent claims constitute embodiments of the invention. Methods, apparatuses, and computer program products are provided in accordance with an example embodiment for providing improved physical downlink control channel (PDCCH) ordered physical random-access channel (PRACH) transmission in lower-layer triggered mobility (LTM).

In accordance with a first aspect of the present disclosure, a computer-implemented method for providing improved PDCCH ordered PRACH transmission in LTM is provided. The computer-implemented method is performable by one or more specially configured computing device(s) embodied in hardware, software, firmware, and/or any combination thereof, for example as described herein.

## BRIEF DESCRIPTION OF THE DRAWINGS

Having thus described certain example embodiments in general terms, reference will now be made to the accompanying drawings, which are not necessarily drawn to scale, and wherein:

FIG. 1 is a block diagram of a communication system configured in accordance with one or more example embodiments of the present disclosure;

FIG. 2 is a block diagram of an apparatus that can be configured to provide improved physical downlink control channel (PDCCH) ordered physical random-access channel (PRACH) transmission in lower-layer triggered mobility (LTM) in accordance with one or more example embodiments of the present disclosure;

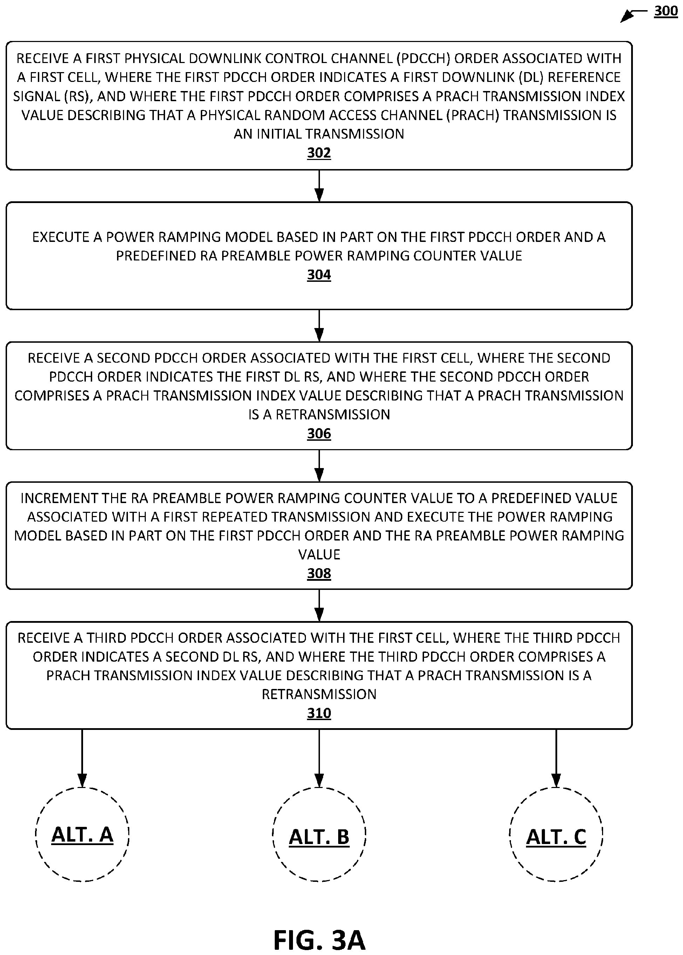

FIG. 3A illustrates a flowchart depicting a method for improved ordered PRACH transmission in LTM in accordance with one or more example embodiments of the present disclosure;

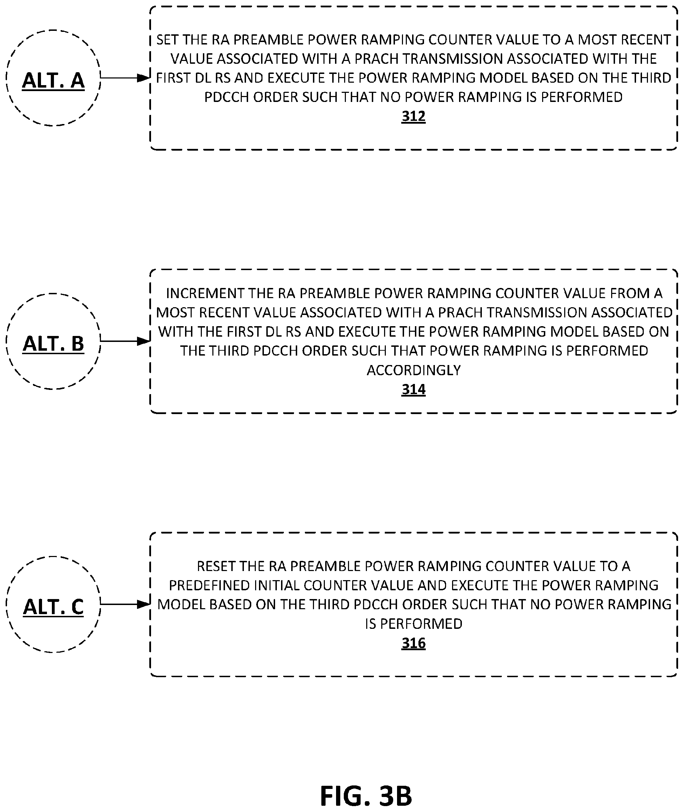

FIG. 3B illustrates a flowchart depicting a method for improved ordered PRACH transmission in LTM in accordance with one or more example embodiments of the present disclosure;

FIG. 4 illustrates a flowchart diagram depicting a method for improved ordered PRACH transmission for a user equipment (UE) in accordance with one or more example embodiments of the present disclosure; and

FIG. 5 illustrates a flowchart depicting a method for improved ordered PRACH transmission for a network element in accordance with one or more example embodiments of the present disclosure.

## DETAILED DESCRIPTION

Some embodiments of the present disclosure will now be described more fully hereinafter with reference to the accompanying drawings, in which some, but not all, embodiments of the present disclosure are shown. Indeed, various embodiments of the present disclosure may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present disclosure. Thus, use of any such terms should not be taken to limit the scope of embodiments of the present disclosure, which is only subject to the scope of protection of the appended independent claims.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As defined herein, a "computer-readable storage medium," which refers to a physical storage medium (e.g., volatile, or non-volatile memory device), may be differentiated from a "computer-readable transmission medium," which refers to an electromagnetic signal.

Additionally, as used herein, the terms "source cell," "serving cell" and/or "LTM serving cell" are used interchangeably to indicate a network cell associated with a respective RAN node (e.g., a gNB) that a UE is currently connected to. Similarly, as used herein, the terms "candidate cell," "target cell," and/or "LTM candidate cell" are used interchangeably to indicate a network cell associated with a respective RAN node (e.g., a gNB) that a UE can potentially connect to. Furthermore, as described herein, various transmissions (e.g., PRACH transmissions) are generally described as being transmitted to a particular cell (e.g., a serving cell, candidate cell, and/or the like). It will be appreciated that transmitting data to the particular cell can be understood to mean transmitting data to any one of one or more networking elements, network nodes (e.g., RAN nodes, gNBs, etc.), and/or any other manner of computing device capable of generating, augmenting, maintaining, managing, and/or otherwise integrating with the particular cell for purposes of facilitating communication via a communications network (e.g., a 5G network) associated with the particular cell.

Example communication systems, frameworks, and/or associated techniques of the present disclosure may be configured to provide improved physical downlink control channel (PDCCH) ordered physical random-access channel (PRACH) transmission in lower-layer triggered mobility (LTM). Additionally or alternatively, the present disclosure may provide techniques to enhance PDCCH ordered RACH transmission for multiple timing advance (TA) operations (e.g., for intra-cell and/or inter-cell TA operations) where in multiple TA values may be maintained for a serving cell. As an example, multiple TAs may be maintained and/or utilized for multiple transmission and reception point (TRP) communication wherein an uplink (UL) transmission may be associated with first or second TA value. However, it should be understood that the present disclosure is not limited to the particular types of communication systems and/or processes disclosed. For example, although illustrated in the context of wireless cellular systems utilizing 3GPP system elements such as a 3GPP next generation core network, the disclosed embodiments can be adapted in a straightforward manner to a variety of other types of communication systems. Additionally, while the present disclosure may describe certain embodiments in conjunction with a 5G communications system, other embodiments also apply to and comprise other networks and network technologies, such as 3G, 4G, Long Term Evolution (LTE), 6G, etc., without limitation.

In accordance with an illustrative embodiment implemented in a 5G communication system environment, one or more 3GPP standards, specifications, and/or protocols provide further explanation of user equipment (UE) and core network elements/entities/functions and/or operations performed by the UE and the core network elements/entities/functions, e.g., the 3GPP System Aspects (SA) Working Group 5 (3GPP SA5), the 3GPP RAN 3. Other 3GPP standards, specifications and/or protocols provide other conventional details that one of ordinary skill in the art will realize. However, while illustrative embodiments are well-suited for implementation associated with the above-mentioned 3GPP standards, alternative embodiments are not necessarily intended to be limited to any particular standards.

Embodiments of the present disclosure generally relate to new radio (NR) mobility enhancements, and specifically to Layer 1/Layer 2 (L1/L2) -based inter-cell mobility-also known as lower-layer triggered mobility (LTM). Furthermore, any enhancements disclosed herein may be applied for multiple TA operation (e.g. within a single serving cell). When a particular UE traverses between network cells associated with one or more RAN nodes (e.g., one or more gNBs), a cell switch procedure (also known as a handover procedure) is executed in order to switch the UE from a serving cell (a current network cell, also known as a source cell) to a candidate cell (also known as a target cell. According to current 3GPP specifications, the handover is currently based on Layer 3 (L3) network measurements and radio resource control (RRC) signaling. However, in order to reduce latency, overhead, and service downtime commonly associated with L3-based mobility management, embodiments of the present disclosure optimize, configure, and/or further improve one or more features of NR LTM.

One such area of improvement pertains to TA management in which a UE can be configured to obtain a TA value for at least one candidate network cell (e.g., a target LTM candidate cell) prior to executing a cell switch command configured to switch the UE to the candidate cell from the current source cell (e.g., the serving cell) associated with the UE over to the candidate network cell. This process is known as early TA acquisition and can be performed using a PDCCH ordered random access (RA) procedure. A TA can be understood as a command and/or configuration transmitted and/or provided to the UE from a particular RAN node (e.g., a gNB) that enables the UE to apply and/or adjust (or readjust) the timing of UL transmissions related to the UE to align with the downlink (DL) subframe timing of the communications network (e.g., such as a 5G network , a 6G network, or beyond). As such, the TA acquisition process serves to synchronize UL transmissions with respect to the DL transmission timing between the UE and the particular RAN node (e.g., a gNB).

As described herein, TA acquisition can be performed as part of a PDCCH order issued by a RAN node (e.g., a gNB). In general, a PDCCH order can be used to synchronize transmissions between a particular UE and a particular RAN node (e.g., a gNB) and can be issued to the UE for various reasons. For example, a gNB may issue a PDCCH order to a UE when the gNB and the UE are out of sync (e.g., the UE has no uplink timing) or, as will be further described herein, upon/prior to handover of the UE from a serving cell to a candidate cell. In some contexts, a PDCCH order can cause a UE to initiate a PRACH transmission (e.g., transmission of a random access (RA) preamble) in order to achieve synchronization between the UE and the gNB.

In various embodiments, the PDCCH order can be configured in a downlink control information (DCI) format (e.g., DCI format 1_0). DCIs, also described as DCI messages and/or DCI payloads, comprise control information that is used for scheduling physical resources for DL and/or UL transmissions between a UE and a RAN node serving a particular network cell (e.g., an LTM candidate cell). One or more DCIs can comprise various DCI fields (e.g., data fields) depending on a particular format associated with the one or more DCIs. Examples of information that can be comprised by the various DCI fields associated with the PDCCH order can include, but are not limited to, a DCI format identifier, a frequency domain resource assignment, an RA preamble index, UL/supplementary UL indicator, synchronization signal (SS)/physical broadcast channel (PBCH) index, a PRACH mask index, a PRACH transmission index, identity information related to a candidate cell, a DL reference signal (RS) index, an SS block (SSB) index, information related to a RACH occasion, an RA response (RAR) configuration indication (e.g. whether the UE expects an RAR transmission from a RAN node or not), and/or the like.

Based on the PDCCH order, the UE can execute a PRACH transmission to a RAN node (e.g., a gNB) associated with a network cell indicated by the PDCCH order (e.g. an LTM candidate cell). However, the UE must determine the transmission power necessary to successfully execute the PRACH transmission and, as such, can execute a power ramping procedure in order to determine the correct transmission power.

According to the current 3GPP specifications, a UE can determine a transmission power for a PRACH, $P_{PRACH,b,f,c}$ $(i)$, on active UL bandwidth part (BWP) $b$ of carrier $f$ of serving cell $c$ based on DL RS for serving cell $c$ in transmission occasion $i$ as $P_{PRACH,b,f,c}$ $(i) = \{P_{CMAX,f,c}(i), P_{PRACH,target,f,c} + PL_{b,f,c}\}$ [dBm], where $P_{CMAX,f,c}(i)$ is the UE configured maximum output power defined for carrier $f$ of serving cell $c$ within transmission occasion $i$, $P_{PRACH,target,f,c}$ is the PRACH target reception power *PREAMBLE_RECEIVED TARGET_POWER* provided by higher layers for the active UL BWP $b$ of carrier $f$ of serving cell $c$, and $PL_{b,f,c}$ is a pathloss for the active UL BWP $b$ of carrier $f$ based on the DL RS associated with the PRACH transmission on the active DL BWP of serving cell $c$ and calculated by the UE in dB as (*referenceSignalPower* - a higher layer filtered reference signal received power (RSRP)) in dBm. If the active DL BWP is the initial DL BWP and for SS/PBCH block and the *CORESET* multiplexing pattern 2 or 3, the UE determines $PL_{b,f,c}$ based on the SS/PBCH block associated with the PRACH transmission. If a PRACH transmission from a UE is in response to a detection of a PDCCH order by the UE that triggers a contention-free RA procedure and depending on the DL RS that the demodulation reference signal (DM-RS) of the PDCCH order is quasi-collocated with, *referenceSignalPower* is provided by *ss-PBCH-BlockPower.*

Current 3GPP specifications also provide a legacy PRACH power ramping procedure in which a medium access control (MAC) layer entity can, for each RA preamble, determine:

a. If *PREAMBLE_TRANSMISSION COUNTER* is greater than one; and
b. If the notification of suspending power ramping counter has not been received from lower layers; and
c. If listen-before-talk (LBT) failure indication was not received from lower layers for the last RA preamble transmission; and
d. If SS block (SSB) or CSI-RS selected is not changed from the selection in the last RA preamble transmission:

i. then increment *PREAMBLE_POWER _RAMPING_COUNTER* by 1.

e. Select the value of *DELTA_PREAMBLE* according to clause 7.3; and
f. *Set PREAMBLE_RECEIVED_TARGET_POWER* to *preambleReceivedTargetPower + DELTA PREAMBLE + (PREAMBLE_POWER_RAMPING_COUNTER - 1) × PREAMBLE POWER RAMPING STEP + POWER OFFSET 2STEP RA.*

As described herein, the above-mentioned power ramping procedure for PRACH transmissions to a serving cell can be found in the current 3GPP specifications. However, a power ramping procedure for a PDCCH ordered PRACH transmission to an LTM candidate cell (which can be a non-serving cell, e.g., a candidate cell) is not provided by the current 3GPP specifications. Furthermore, a power ramping procedure for a PRACH transmission controlled by a PDCCH order formatted as a DCI is not captured in the current specifications. Moreover, the current 3GPP specifications do not capture PRACH transmission wherein the response (e.g., an RAR response) is not provided to a UE by a RAN node (e.g., a gNB).

Furthermore, current workgroup agreements related to the current 3GPP specifications now dictate required practices for circumstances in which RA response (RAR) need not be configured for one or more RAN nodes (e.g., one or more gNBs) in a communication network. Traditionally, when a RAN node (e.g., a gNB) issues a PDCCH order and a UE is triggered to transmit an RA preamble back to the RAN node, the RAN node will acknowledge receipt of the RA preamble by transmitting an RAR to the UE.

However, according to one or more workgroup agreements related to the current 3GPP specifications for PDCCH ordered RACH, if reception of RAR is not configured (e.g., a gNB is not required to transmit an RAR to a UE in response to receiving a RACH preamble from the UE), the UE is not allowed to execute autonomous retransmission of the PRACH, regardless of the configuration of *PreambleTransMax.* Furthermore, whether the UE performs power ramping or not is determined from a PDCCH order. If the UE performs power ramping, whether the PRACH is an initial transmission or retransmission may be explicitly indicated in the PDCCH order and the power ramping value may be configured based on a RA preamble power ramping counter value associated with the transmission/retransmission. However, if the UE does not perform power ramping, the transmission power should be determined by an open-loop power control protocol.

Accordingly, based on the workgroup agreements related to the current 3GPP specification, when RAR reception is not configured, whether the PDCCH order is an initial transmission or the retransmission is explicitly indicated to the UE. The retransmission indication may be used by the UE to determine whether the UE should apply power ramping for the currently ordered PRACH transmission. If the current power ramping procedure is followed, the power ramping counter is increased for subsequent retransmissions of PRACH preambles if the target DL RS is not changed. Ideally, the UE increases the power ramping counter. However, due to an agreement that UE autonomous retransmission is not allowed, and the retransmission is always triggered by the network (e.g., indicated in a new PDCCH order by a PRACH transmission index).

The current 3GPP specification and the aforementioned workgroup agreements introduce a plurality of potential problems. In a first scenario, if a UE has missed the initial transmission of the PDCCH order (e.g., the PDCCH order could not be received and/or decoded) and the UE receives a subsequent PDCCH order indicating retransmission of the PRACH, it is not clear how the UE can determine the correct power ramping value (e.g., the UE may not be able to determine what the correct RA preamble power ramping counter value for indexing the power ramping values should be).

In a second scenario, the UE may not be able to determine whether the UE has missed at least one DCI triggering at least one retransmission of a the PDCCH ordered RACH after the UE has received an initial PDCCH order or after the UE has received at least one retransmission indication after an initial PRACH transmission (i.e. the UE may have missed a retransmission trigger between retransmissions).

In a third scenario, if, after receiving a PDCCH order indicating a first DL RS (e.g., as indicated via a first DL RS index and/or an SSB index associated with the PDCCH order), the UE receives a subsequent PDCCH order for PRACH transmission to a new, second target DL RS (e.g., the target is changed from the current DL RS to another DL RS) and the UE has missed (e.g., not received) the initial transmission for the second DL RS, then the UE may not know how to determine the correct RA preamble power ramping counter value. Furthermore, if the UE has already reached the maximum allowable retransmissions and/or if the UE may have missed the maximum allowable power ramping steps, there is a problem how to handle the *PREAMBLE_POWER_RAMPING_COUNTER* counter.

In a fourth scenario, if a PDCCH order is sent to a UE for reacquisition of a TA for the same serving cell due to TA invalidity, it is not clear for the UE whether the PDCCH order is sent for retransmission of the RACH with a higher RA preamble power ramping counter value.

To address these and other problems, embodiments of the present disclosure are configured to provide improved PDCCH ordered PRACH transmission in LTM.

In various embodiments, if a UE receives a PDCCH order for PRACH transmission to at least one LTM candidate cell, and the PDCCH order indicates a retransmission for (e.g., associated with) a target DL RS (e.g., indicated by a DL RS and/or an SSB index provided in the PDCCH order) for which the UE has not performed an initial PRACH transmission, the UE shall consider the indication as an initial PRACH transmission from the power ramping perspective. Upon determining that the PRACH transmission is an initial transmission, the UE does not apply any power ramping for the PRACH transmission. For example, in various embodiments, the UE sets an RA preamble power ramping counter (e.g., *PREAMBLE_POWER_RAMPING_COUNTER*) to an initial value that indicates that no power ramping is applied (e.g. an initial RA preamble power ramping counter value of 1). Accordingly, the UE may apply power ramping for any subsequent retransmissions for the PRACH preamble with the same target DL RS. Hence, when the UE receives the PDCCH order, the UE will apply the power ramping (e.g., increment the RA preamble power ramping counter value) only if the UE has performed the PRACH transmission for the same cell (e.g., the serving cell) prior to receiving the PDCCH order.

In various embodiments, a maximum value for the RA preamble power ramping counter may be defined. This parameter (e.g. an "RA preamble power ramping counter maximum value"), may be configured by the network (e.g. using RRC signaling). In some scenarios, the RA preamble power ramping counter value is increased when an RA preamble (re) transmission counter for the PRACH is increased. In some embodiments, the UE may maintain an RA preamble power ramping counter or (re)transmission counter or both. The RA preamble power ramping counter value may be increased each time the UE performs transmission of PRACH wherein the UE has determined that RA preamble power ramping counter value is increased. When the maximum value for the RA preamble power ramping counter is reached, the UE does not apply any further power ramping for subsequent PRACH transmissions. In some contexts, the counter value may be specific for a cell ( e.g. cell specific maximum value). In some embodiments, the RA preamble power ramping counter may have a predefined maximum value $N$ (e.g., $N = 1$, $N = 2$, $N = 3$, etc.).

In some contexts, the RA preamble power ramping value (or RA preamble power ramping counter value) may have a limited number of possible values. As an example, if the PDCCH order indicates an initial transmission, the UE applies no power ramping (e.g., or applies an RA preamble power ramping counter value = 1). If the PDCCH order indicates retransmission, the UE applies power ramping (e.g. or applies an RA preamble power ramping counter value = 2 or a value that indicates that power is increased with at least one step). The RA preamble power ramping counter value of 2 may indicate that at least one power ramping step/value is applied for the PDCCH ordered PRACH transmission. In some contexts, the UE may not apply any further power ramping for subsequent transmissions. As an example, the UE may perform the PRACH transmission (PDCCH ordered) with an initial transmission power level (e.g. no power ramping) when the PDCCH order indicates initial transmission. In another example, the UE may perform PRACH transmission with ramped power when retransmission is indicated. In other examples, the UE may ramp the power only with one step and no further steps are applied for subsequent retransmissions. The power ramping step value (e.g. expressed in dBs) may be configurable and the power ramping step values may vary (e.g. 3dB, 6dB, etc.).

In some embodiments, the RA preamble power ramping counter value may refer to the power ramping value applied for the initial transmission or retransmission. If the PDCCH order indicates an initial transmission (or the UE determines that the PRACH transmission is considered an initial transmission) the UE may determine that power ramping counter value is set to value where no power ramping is applied. If the PDCCH order indicates an initial transmission the UE may determine that the RA preamble power ramping counter value may be set to value where at least one (or at most one) power ramping step is applied/performed.

In various embodiments, the setting of the RA preamble power ramping counter value to a predefined initial counter value may indicate that no power ramping is applied for the PRACH transmission. The predefined initial counter value may refer to a value that, when indicated (e.g. or when applied), causes no power ramping to be performed.

In some examples, if the PDCCH order indicates (re)transmission, a further indication may be provided in the PDCCH order that provides the value of the power ramping to be applied for the retransmission. As an example, the indication may comprise of a bitfield (e.g., a DCI data field) wherein the bitfield is mapped to power ramping step values (e.g. 3dB, 6dB) that may have been configured by RRC.

In various embodiments, if a UE receives a PDCCH order for a PRACH transmission to at least one LTM candidate cell and the PDCCH order indicates a retransmission for a target DL RS for which the UE has not performed the initial PRACH transmission, the UE shall consider the indication as the first PRACH retransmission (e.g., regardless of how many PDCCH orders may have been missed). Upon determining that the PRACH transmission is the first retransmission, the UE applies power ramping for the PRACH transmission assuming that the PRACH transmission is a first For example, in various embodiments, the UE sets an RA preamble power ramping counter (e.g., *PREAMBLE_POWER_RAMPING_COUNTER*) to a value that indicates power ramping is applied according to a first retransmission (e.g. a value equal to an initial RA preamble power ramping counter value that has been incremented once (e.g. the transmission power level is increased by one step)). Said differently, even though a network element (e.g., a gNB) may have determined that the UE has ramped power one or more times, the UE only ramps power according to a value associated with a first PRACH retransmission. Accordingly, the UE may apply power ramping (e.g., increment the RA preamble power ramping counter value) for any subsequent retransmissions for the PRACH preamble with the same target DL RS.

If a UE receives a first PDCCH order indicating a retransmission for a first target DL RS (e.g., as indicated by a first DL RS index and/or a first SSB index associated with the first PDCCH order), if the UE determines that the UE has performed least one or more PRACH transmissions (e.g., an initial transmission or one or more retransmissions) associated with the first target DL RS, and if the UE determines that the UE has received a second PDCCH order indicating a retransmission associated with a second target DL RS (e.g., as indicated by a second DL RS index and/or a second SSB index associated with the second PDCCH order), where the second PDCCH order is associated with a same LTM candidate cell as the first PDCCH order, the UE shall set the RA preamble power ramping counter value to a most recent value associated with the at least one or more PRACH transmissions associated with the first target DL RS. Accordingly, the UE may apply power ramping (e.g., increment the RA preamble power ramping counter value) for any subsequent retransmissions for the PRACH preamble with the same target DL RS (e.g., the second target DL RS).

If a UE receives a first PDCCH order indicating a retransmission for a first target DL RS (e.g., as indicated by a first DL RS index and/or a first SSB index associated with the first PDCCH order), if the UE determines that the UE has performed least one or more PRACH transmissions (e.g., an initial transmission or one or more retransmissions) associated with the first target DL RS, and if the UE determines that the UE has received a second PDCCH order indicating a retransmission associated with a second target DL RS (e.g., as indicated by a second DL RS index and/or a second SSB index associated with the second PDCCH order), where the second PDCCH order is associated with a same LTM candidate cell as the first PDCCH order, the UE shall increment the RA preamble power ramping counter value from a most recent value associated with the at least one or more PRACH transmissions associated with the first target DL RS. Accordingly, the UE may apply power ramping (e.g., increment the RA preamble power ramping counter value) for any subsequent retransmissions for the PRACH preamble with the same target DL RS (e.g., the second target DL RS).

If a UE receives a first PDCCH order indicating a retransmission for a first target DL RS (e.g., as indicated by a first DL RS index and/or a first SSB index associated with the first PDCCH order), if the UE determines that the UE has performed least one or more PRACH transmissions (e.g., an initial transmission or one or more retransmissions) associated with the first target DL RS, and if the UE determines that the UE has received a second PDCCH order indicating a retransmission associated with a second target DL RS (e.g., as indicated by a second DL RS index and/or a second SSB index associated with the second PDCCH order), where the second PDCCH order is associated with a same LTM candidate cell as the first PDCCH order, the UE shall reset the RA preamble power ramping counter (e.g., *PREAMBLE_POWER_RAMPING_COUNTER*) to an initial value that indicates that no power ramping is applied (e.g. an initial RA preamble power ramping counter value of 1).

In one or more embodiments, various UL transmission prioritization rules can dictate which types of UL transmission (e.g., PRACH, PUCCH, PUSCH, SRS, and/or the like) get priority when one or more UL transmissions collide (e.g., are transmitted to a same gNB at a same and/or overlapping time period). As such, there are circumstances in which UL transmission prioritization rules and/or UE capabilities (e.g., a UE that is configured to only execute one UL transmission at a time) may cause one or more UL transmissions to be dropped (e.g., terminated) in favor of a UL transmission that takes priority. In various embodiments, if such an UL prioritization/collision circumstance occurs and the UE does not execute a PRACH transmission to an LTM candidate cell in a transmission occasion, the corresponding RA preamble power ramping counter associated with the LTM candidate cell and/or the same or different DL RS/SSB may be suspended. Said differently, if an UL transmission prioritization/collision circumstance occurs and the UE cannot execute an expected PRACH transmission, no increment is made to the RA preamble power ramping counter value.

Additionally or alternatively, in one or more embodiments, various UL transmission prioritization rules can dictate that UL transmission power be distributed across one or more UL transmissions (e.g., PRACH, PUCCH, PUSCH, SRS, and/or the like) that are being executed simultaneously such that the originally allotted UL transmission power is shared amongst the UL transmissions that are being executed simultaneously. In various embodiments, if such a UL transmission power distribution occurs and the UE transmits a PRACH to a LTM candidate cell with reduced power in a transmission occasion, the corresponding RA preamble power ramping counter associated with the LTM candidate cell and/or the same or different DL RS/SSB) may be suspended. Said differently, if, due to a UL transmission collision involving a PRACH transmission in which multiple UL transmissions must share the originally allotted transmission power, no increment is made to the PRACH power ramping counter value.

In various embodiments, one or more computational capabilities associated with a UE may limit the number of active RA preamble power ramping counters the UE can maintain. In various embodiments, the one or more computational capabilities associated with the UE that determine the maximum number of active RA preamble power ramping counters for an LTM RACH procedure without RAR being configured across all the candidate cells and/or DL RS/SSBs can be indicated to the communications network (e.g., a 5G/6G or beyond network). In one or more embodiments, if the number of active RA preamble power ramping counters exceeds the one or more computational capabilities of the UE, the UE can terminate an oldest active RA preamble power ramping counter associated with the active RA preamble power ramping counters. Additionally or alternatively, in various embodiments, the one or more computational capabilities of the UE related to the maximum number of active RA preamble power ramping counters the UE can maintain may be indicated to the communications network (e.g., the 5G network) for all possible RACH procedures for the current serving cells and/or LTM candidate cells. Additionally or alternatively, in various embodiments, the one or more computational capabilities of the UE related to the maximum number of active RA preamble power ramping counters the UE can maintain may be indicated to the communications network (e.g., the 5G network) for all possible LTM candidate cells for both PDCCH ordered RACH options (e.g., PDCCH ordered RACH with RAR configured or PDCCH ordered RACH without RAR configured).

In various embodiments, a UE can be configured to maintain the latest RA preamble power ramping counter value associated with a particular cell and/or a DL RS/SSB even after the UE has switched to a new candidate target cell. In various circumstances, the latest RA preamble power ramping counter value associated with the particular cell and/or the DL RS/SSB used by the UE before the cell switch may be used for power ramping for LTM purposes once the UE is served by the new candidate target cell. In such circumstances, using the latest RA preamble power ramping counter value associated with the particular cell and/or the DL RS/SSB used by the UE before the cell switch may be useful for dynamic switching purposes.

In various embodiments, the UE can be configured to maintain the latest RA preamble power ramping counter value associated with a particular cell and/or a DL RS/SSB. As an example, if the UE determines that a new target DL RS (e.g., of the same cell or a different cell) is indicated by the PDCCH order, the UE may determine to reset the power ramping counter (e.g., or any counter that may be used to determine the power ramping value for the PRACH transmission). In some contexts, the UE may be configured to maintain only one power ramping counter. As an example, if only one power ramping counter is maintained and a change of target DL RS and/or target cell is indicated, the UE may restart the power ramping counter. In other words, the UE does not keep the previous counter values. As such, when RAR is not configured (e.g. for an LTM candidate cell) a PDCCH order to a new DL RS (e.g., of any cell) is considered as a new RACH procedure such that the power ramping counter values/power ramping is reset.

In various embodiments, if RAR is configured and a UE has acquired a TA of a candidate cell, and if a PDCCH order is received by the UE for the same candidate cell, the UE can be configured to reset the RA preamble power ramping counter as it will be understood that the PDCCH order will be for TA reacquisition purposes. As such, power ramping is not needed and the UE can be configured to execute the PRACH transmission as if the PRACH transmission is an initial PRACH transmission.

In various circumstances, when RAR is not configured a TA may become invalid and, traditionally, TA invalidity can only be detected by a network element (e.g., a gNB) associated with the serving cell. For example, if a UE received a PDCCH order for a candidate cell and executed the PRACH transmission, but the network element (e.g., the gNB) of the candidate cell sent the TA to the serving cell, the TA may become invalid and, as described herein, TA invalidity may be detected by the serving cell. In such a case, the serving cell may trigger the TA acquisition of the same candidate cell again with another PDCCH order. As such, the serving cell may indicate that the PDCCH order is for reacquisition of the TA so that the UE will not apply power ramping. In one example, the UE may use the RA preamble power ramping counter value that was used for the latest PRACH transmission. In one example, the UE may use the RA preamble power ramping counter value that is used for initial PRACH transmission. In another example, the UE may use the RA preamble power ramping counter value that is used for first retransmission of a PRACH transmission. The PDCCH order will have a counter for the TA acquisition of a particular cell and the counter will be increased whenever the PDCCH order is sent for reacquisition. Said differently, the reacquisition of a TA associated with a particular cell may be explicit (e.g., indicated in the PDCCH order) or implicit (e.g., based on an indication of initial transmission wherein the initial transmission is indicated for the same target DL RS for which UE has performed at least one PRACH transmission earlier).

In various embodiments, if the UE receives a PDCCH order for PRACH transmission to at least one LTM candidate cell, and the PDCCH order indicates a retransmission for a target DL RS for which the UE has previously performed a PRACH transmission (e.g., initial or one or more retransmissions) and the UE changes an uplink spatial filter (e.g., a spatial domain transmission filter such as a transmission beam) for the PRACH transmission, the UE resets the power ramping counter.

In various embodiments, in scenarios in which the UE has sent multiple PRACH transmissions to a candidate cell with different configurations (e.g., in terms of SSB index, RO and/or RA preamble index), various PRACH transmission prioritization rules may be used by the UE to derive the power for a new retransmission (e.g., to derive the RA preamble power ramping counter value). For example, a first priority can be given to a recent PRACH transmission for the same candidate cell for which the SSB (e.g., or target DL RS), RO, and the RA preamble ID are given in a PDCCH order with a retransmission indication. A second priority can be given to a recent PRACH transmission for the same candidate cell for which the SSB (e.g., or target DL RS) and RO are given in the PDCCH order with a retransmission indication. A third priority can be given to recent PRACH transmission for the same candidate cell for which only the SSB (e.g., or target DL RS) is given in the PDCCH order with a retransmission indication. A fourth priority can be given to a recent PRACH transmission for the same candidate cell for which neither the SSB (e.g., or target DL RS), RO, nor the RA preamble ID are given in the PDCCH order with a retransmission indication. As such, in various embodiments, the RA preamble power ramping counter value may only be incremented for PRACH transmissions that meet the criteria of one or more PRACH transmission prioritization rules associated with a predetermined priority level (e.g., the first and/or or second priority level).

Additionally or alternative, in various embodiments, if any of the parameters of a PDCCH order including the candidate cell identity, SSB (e.g., target DL RS), RO, and/or the RA preamble ID do not match the parameters of a PRACH transmission previously transmitted by the UE and the PDCCH order indicates a retransmission, the UE will always use the initial power for the PRACH transmission (e.g., an RA preamble power ramping counter value = 1 or a value meaning that no power ramping is applied).

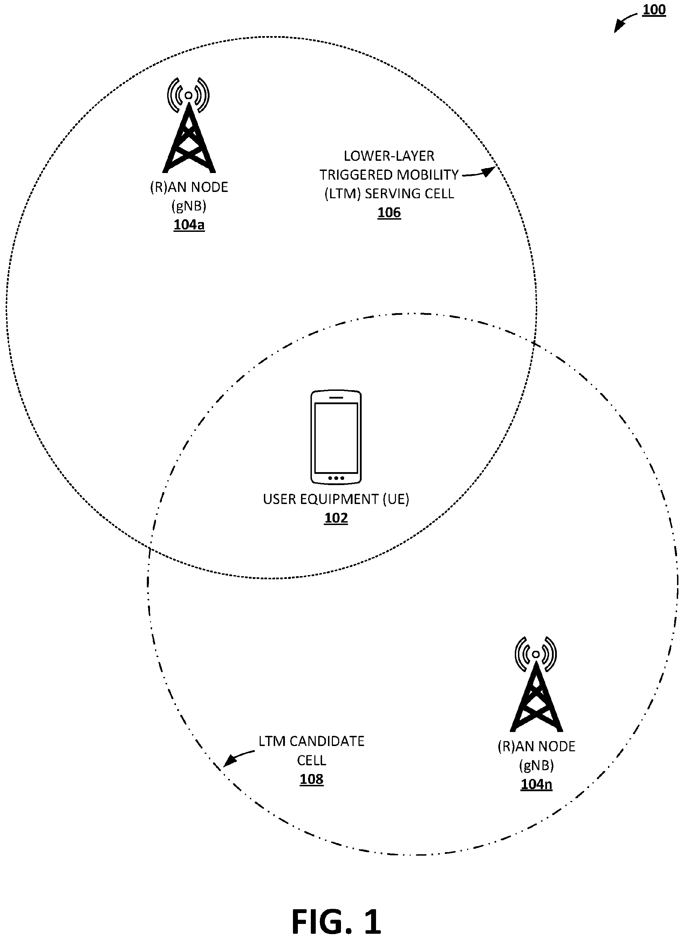

FIG. 1 illustrates a communication system 100 configured in accordance with at least some embodiments of the present disclosure. However, it is to be appreciated that embodiments are not limited to the network configurations illustrated herein or otherwise described below. It is to be understood that the elements shown in communication system 100 are intended to represent a primary function provided within the system. As such, the blocks shown in FIG. 1 reference specific elements in 5G networks that provide the primary functions. However, other network elements may be used to implement some or all of the primary functions represented. Also, it is to be understood that not all functions of a 5G network are depicted in FIG. 1. Rather, functions that facilitate an explanation of illustrative embodiments are represented.

By way of example, the communication system 100 may be deployed within a radio access architecture. However, the system may be deployed in other applications including within other communication networks including, for example, LTE advanced (LTE-A), a universal mobile telecommunications system (UMTS) radio access network (UTRAN or E-UTRAN), wireless local area network (WLAN or Wi-Fi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof. Any access network (AN) eligible to access the 5G core network such as an untrusted Non 3GPP access terminated at a Non-3GPP interworking function (N3IWF), a trusted Non-3GPP access terminated at a trusted non-3GPP gateway function (TNGF) or a Wireline access terminated at a wireless access gateway function (W-AGF) may be used instead of the NG RAN/gNB. Moreover, although described herein in conjunction with a 5G core network, the method, apparatus, and computer program product of certain example embodiments may be employed in conjunction with other technologies, such as a 5G, 6G, and/or beyond network or the like.

A UE 102 can be configured to be in a wireless connection on one or more communication channels in a cell with a radio access network (RAN) node, such as a gNB. The physical link from a UE 102 to a gNB is called the uplink (UL) or reverse link and the physical link from the gNB to the UE 102 is called the downlink (DL) or forward link. It should be appreciated that the gNBs or their functionalities may be implemented by using any node, host, server, or access point (AP) or other entity suitable for such a usage. Furthermore, a UE 102 can be configured to be in a wireless connection to one or more other UEs such as, for example, via a Sidelink channel.

A communications system typically comprises more than one gNB, in which case the gNBs may also be configured to communicate with one another over links, wired or wireless, designed for the purpose. These links may be used for signaling purposes. The gNB is a computing device configured to control the radio resources of the communication system to which the gNB is coupled. The gNB may also be referred to as a base station, an access point or any other type of interfacing device including a relay station capable of operating in a wireless environment. The gNB includes or is coupled to one or more transceiver(s). From the transceivers of the gNB, a connection is provided to an antenna unit that establishes bi-directional radio links to UEs. As such, the transceivers of the gNB and the transceivers of the UEs may include transmitters and receivers configured to communicate via a channel. Although reference is made to a gNB herein, this is by way of example, but not of limitation, as other types of AN nodes may alternatively be employed.

Accordingly, as shown, the communication system 100 comprises a UE 102 that communicate, such as via an air interface, with one or more AN nodes 104a-n. In some embodiments, the one or more AN nodes 104a-n are RAN nodes. The UE 102 may be a mobile station, and such a mobile station may comprise, by way of example, a mobile telephone, a computer, or any other type of communication device. The terms "user equipment (UE)," "user device," "computing device," or "apparatus" as used herein are therefore intended to be construed broadly, so as to encompass a variety of different types of mobile stations, subscriber stations or, more generally, communication devices, including examples such as a combination of a data card inserted in a laptop or other equipment.

The UE 102 may also refer to a portable computing device that includes wireless mobile communication devices operating with or without a subscriber identification module (SIM), including, but not limited to, the following types of devices: a mobile station (mobile phone), smartphone, personal digital assistant (PDA), handset, device using a wireless modem (alarm or measurement device, etc.), laptop and/or touch screen computer, tablet, game console, notebook, and multimedia device. It should be appreciated that a UE 102 may also be a nearly exclusive uplink only device, of which an example is a camera or video camera loading images or video clips to a network. A UE 102 may also be a device having the capability to operate in an IoT network, which is a scenario in which objects are provided with the ability to transfer data over a network without requiring human-to-human or human-to-computer interaction. The UE 102 (or in some embodiments a layer 3 relay node) is configured to perform one or more user device functionalities. The UE 102 may also be called a subscriber unit, mobile station, remote terminal, access terminal, user terminal or user equipment just to mention but a few names or apparatuses.

In one embodiment, a UE 102 is comprised of a Universal Integrated Circuit Card (UICC) and Mobile Equipment (ME). The UICC is the user-dependent part of the UE and contains at least one Universal Subscriber Identity Module (USIM) and appropriate application software. The USIM securely stores the International Mobile Subscriber Identity (IMSI) number and its related key, which are used to identify and authenticate subscribers to access networks. The ME is the user-independent part of the UE and contains terminal equipment (TE) functions and various mobile termination (MT) functions.

The AN nodes 104a-n are illustratively part of a RAN of the communication system 100. In a 5GS network, the AN nodes 104a-n are typically implemented by an gNB. Such an access network may comprise, for example, a plurality of base stations which may include one or more gNBs (which may also be split in a centralized unit (CU) and a distributed unit (DU) part) and/or other AN node types, such as evolved node Bs (eNBs), node Bs, base stations (BS) and/or N3IWF, or any other types of access nodes such as WLAN access points, as well as one or more associated radio network control functions. The base stations and radio network control functions may be logically separate entities, but in a given embodiment may be implemented in the same physical network element, such as, for example, a base station router or femto cellular access point. As will be appreciated by one of skill in the art, any variety of AN nodes and/or access nodes may also implement similar operations, functions, etc.

In some example embodiments, the AN nodes 104a-n are operatively coupled to a core network function, such as via an NG interface. The core network function may include an access and mobility management function (AMF), session management function (SMF), representative network function (NF-X), or any of core network function. A core network function may be an element of the core network (CN) part of the communication system 100 that is responsible for one or more associated operations. Additionally or alternatively, the AN nodes 104a-n can generate, relay, augment, and/or otherwise manage one or more network cells configured to provide communications services (e.g., provide access to one or more services associated with the core network function) to one or more UEs 102 located within operational range of the one or more respective network cells.

According to various embodiments, an LTM serving cell 106 is a network cell associated with an AN node 104a that a UE 102 is currently connected to in order to facilitate communications via a particular network (e.g., a 5G network). An LTM candidate cell 108 is a network cell associated with an AN node 104n that the UE 102 may potentially switch to (e.g., via a handover procedure) as the UE 102 traverses a real-world environment associated with one or more network cells related to the particular network (e.g., the 5G network).

5G enables using multiple input, multiple output (MIMO) antennas, many more base stations or nodes than the LTE (a so-called small cell concept), including macro sites operating in co-operation with smaller stations and employing a variety of radio technologies depending on service needs, use cases and/or spectrum available. 5G mobile communications supports a wide range of use cases and related applications including video streaming, augmented reality, different ways of data sharing and various forms of machine type applications (such as (massive) machine-type communications (mMTC), including vehicular safety, different sensors, and real-time control. 5G has multiple radio interfaces, e.g., below 6GHz or above 24 GHz, cmWave and mmWave, and is integrable with existing legacy radio access technologies, such as the LTE. Integration with the LTE may be implemented as a system where macro coverage is provided by the LTE and 5G radio interface access comes from small cells by aggregation to the LTE. In other words, 5G can support both inter-RAT operability (such as LTE-5G) and inter-RI operability (inter-radio interface operability, such as below 6GHz - cmWave, 6 or above 24 GHz - cmWave and mmWave).

The low latency applications and services in 5G require to bring the content close to the radio which leads to local break out and multi-access edge computing (MEC). 5G enables analytics and knowledge generation to occur at the source of the data. This approach requires leveraging resources that may not be continuously connected to a network such as laptops, smartphones, tablets, and sensors. MEC provides a distributed computing environment for application and service hosting. It also has the ability to store and process content in close proximity to cellular subscribers for faster response time. Edge computing covers a wide range of technologies such as wireless sensor networks, mobile data acquisition, mobile signature analysis, cooperative distributed peer-to-peer ad hoc networking and processing also classifiable as local cloud/fog computing and grid/mesh computing, dew computing, mobile edge computing, cloudlet, distributed data storage and retrieval, autonomic self-healing networks, remote cloud services, augmented and virtual reality, data caching, Internet of Things (massive connectivity and/or latency critical), critical communications (autonomous vehicles, traffic safety, real-time analytics, time-critical control, healthcare applications, etc.).

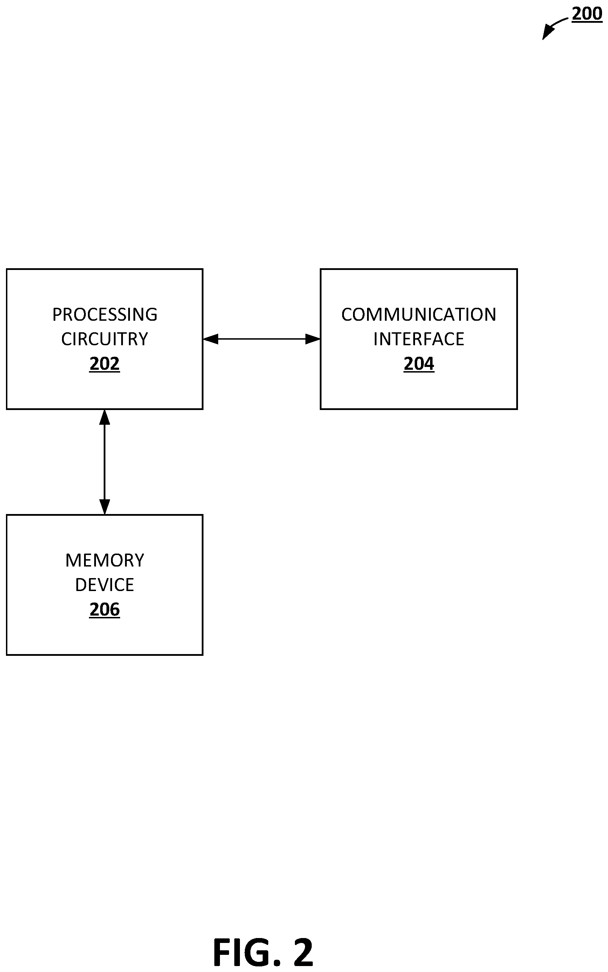

FIG. 2 illustrates an example of an apparatus 200 that may be configured to function as, or may be embodied by, a network entity, such as a UE 102, UE, AN node 104, AMF, SMF and/or NF-X. As shown in FIG. 2, the apparatus 200 includes, is associated with or is in communication with processing circuitry 202, a memory device 206, and a communication interface 204. The processing circuitry 202 may be in communication with the memory device via a bus for passing information among components of the apparatus 200. The memory device 206 may be non-transitory and may include, for example, one or more volatile and/or non-volatile memories. In other words, for example, the memory device 206 may be an electronic storage device (e.g., a computer readable storage medium) comprising gates configured to store data (e.g., bits) that may be retrievable by a machine (e.g., a computing device like the processing circuitry). The memory device 206 may be configured to store information, data, content, applications, instructions, or the like for enabling the apparatus to carry out various functions in accordance with an example embodiment of the present disclosure. For example, the memory device 206 could be configured to buffer input data for processing by the processing circuitry 202. Additionally or alternatively, the memory device 206 could be configured to store instructions for execution by the processing circuitry 202.

The apparatus 200 may, in some embodiments, be embodied in various computing devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment on a single chip or as a single "system on a chip." As such, in some cases, a chip or chipset may constitute means for performing one or more operations for providing the functionalities described herein.

The processing circuitry 202 may be embodied in a number of different ways. For example, the processing circuitry 202 may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry may include one or more processing cores configured to perform independently. A multicore processing circuitry may enable multiprocessing within a single physical package. Additionally or alternatively, the processing circuitry may include one or more processors configured in tandem via the bus to enable independent execution of instructions, pipelining and/or multithreading.

In an example embodiment, the processing circuitry 202 may be configured to execute instructions stored in the memory device 206 or otherwise accessible to the processing circuitry 202. Alternatively or additionally, the processing circuitry may be configured to execute hard coded functionality. As such, whether configured by hardware or software methods, or by a combination thereof, the processing circuitry may represent an entity (e.g., physically embodied in circuitry) capable of performing operations according to an embodiment of the present disclosure while configured accordingly. Thus, for example, when the processing circuitry is embodied as an ASIC, FPGA or the like, the processing circuitry may be specifically configured hardware for conducting the operations described herein. Alternatively, as another example, when the processing circuitry 202 is embodied as an executor of instructions, the instructions may specifically configure the processor to perform the algorithms and/or operations described herein when the instructions are executed. However, in some cases, the processing circuitry 202 may be a processor of a specific device (e.g., an image or video processing system) configured to employ an embodiment of the present disclosure by further configuration of the processing circuitry by instructions for performing the algorithms and/or operations described herein. The processing circuitry 202 may include, among other things, a clock, an arithmetic logic unit (ALU) and logic gates configured to support operation of the processing circuitry.

The communication interface 204 may be any means such as a device or circuitry embodied in either hardware or a combination of hardware and software that is configured to receive and/or transmit data from/to a network and/or any other device (e.g., a particular UE 102, UE, and/or the like) or module in communication with the apparatus. In this regard, the communication interface 204 may include, for example, an antenna (or multiple antennas) and supporting hardware and/or software for enabling communications with a wireless communication network. Additionally, the communication interface 204 can embody and/or integrate with one or more RF and/or wireless transceivers, where each wireless transceiver includes a transmitter to transmit signals and a receiver to receive signals. The one or more RF and/or wireless transceivers can be configured for facilitating communication on a 4G/LTE network, a 5G network, and/or the like. Additionally, the one or more RF and/or wireless transceivers can be configured for facilitating communication on various respective communication networks. The one or more RF and/or wireless transceivers receive signals or data and/or transmit or send signals and/or data. In various embodiments, processing circuitry 202 can control the antenna(s) and/or the one or more RF and/or wireless transceivers to receive, send, broadcast, or transmit signals and/or data. Additionally or alternatively, the communication interface 204 may include the circuitry for interacting with the antenna(s) and/or the one or more RF and/or wireless transceivers to cause transmission of signals via the antenna(s) or to handle receipt of signals received via the antenna(s). Additionally or alternatively, in some environments, the communication interface 204 may support wired communication. As such, for example, the communication interface may include a communication modem and/or other hardware/software for supporting communication via cable, digital subscriber line (DSL), universal serial bus (USB) or other mechanisms.

FIG(s). 3A-B illustrate a flowchart depicting a method 300 for providing improved ordered PRACH transmission in LTM in accordance with one or more example embodiments of the present disclosure. The method 300 can be implemented, for example, by one or more components of an apparatus 200. In various embodiments the apparatus 200 can be embodied by a networking element (e.g., a gNB). In various other embodiments, the apparatus 200 can be embodied by a UE 102. Additionally or alternatively, the apparatus 200 can be embodied by any other particular computing device (e.g., smartphone, laptop, tablet computer, networking device, etc.) associated with a particular communications network. It will be appreciated that the apparatus 200 may be configured to perform the method 300 with the reference to the components of the apparatus 200 again being provided by way of example but not of limitation. As such, the apparatus 200 includes means, such as the processing circuitry 202, at least one processor, communication interface 204, at least one memory device 206, and/or the like, configured to perform the various operations associated with the method 300.

The method 300 is associated with a power ramping model by which a PRACH transmission power level ($P_{PRACH}$) is determined by a UE and used to execute a PRACH transmission for a first cell (e.g., an LTM serving cell 106 or an LTM candidate cell 108) in response to receiving one or more PDCCH orders from the first cell. For purposes of simplifying the exemplary embodiment illustrated by the method 300, a number of conditional parameters related to the power ramping model have been predefined. For example, RAR has not been configured for the UE and/or network element(s) associated with this exemplary embodiment, max power (*maxPower*) is given for the UE, *ss-PBCH-Block-Power,* RA preamble received target power (*Target$_P$*), and RA preamble power ramping step (*Step$_P$*) are given for the first cell, and the value of the RA preamble power ramping counter (*Count$_P$*) has been initialized to a value of 1. The power ramping model involves deriving a path loss ($PL_P$) for a particular DL RS associated with a respective SSB as well as an updated RA preamble received target power ($P1$). In order to derive $P_{PRACH}$, a comparative function configured to derive a minimum value out of a set of values (e.g., min ($x$, $y$)) is employed to determine $min(maxPower, (P1 + PL_P))$.

The method 300 begins at operation 302 in which the apparatus 200 is configured to receive a first PDCCH order associated with a first cell, where the first PDCCH order indicates a first DL RS associated with a first SSB, and where the first PDCCH order comprises a PRACH transmission index value describing that a PRACH transmission is an initial transmission.

At operation 304 the apparatus 200 is configured to execute the power ramping model based in part on the first PDCCH order and the predefined RA preamble power ramping counter value. For example, the apparatus 200 can derive the path loss ($PL_P$) for the first DL RS associated with the first SSB by:

$$PL_P = ss\text{-}PBCH\text{-}BlockPower - L1_{meas}$$

*Equation 1*

where $L1_{meas}$ is a Layer 1 (L1) power measurement (e.g., RSRP) taken with respect to the first cell. The updated RA preamble received target power ($P1$) can be derived by:

$$P1 = Target_P + (Count_P - 1) \times Step_P + \text{additional offset (if configured)}$$

*Equation 2*

and $P_{PRACH}$ can be determined by:

$$P_{PRACH} = \min(maxPower, (P1 + PL_P))$$

*Equation 3*

At operation 306 the apparatus 200 is configured to receive a second PDCCH order associated with the first cell, where the second PDCCH order indicates the first DL RS, and where the second PDCCH order comprises a PRACH transmission index value describing that a PRACH transmission is a retransmission.

At operation 308 the apparatus 200 is configured to increment the RA preamble power ramping counter value to a predefined value associated with a first repeated transmission and execute the power ramping model based in part on the first PDCCH order and the RA preamble power ramping value. For example, *Count$_P$* can be incremented such that *Count$_P$* = *Count$_P$* + 1. As such, the apparatus 200 can derive the path loss ($PL_P$) for the first DL RS associated with the first SSB by Equation 1, the updated RA preamble received target power ($P1$) can be derived by inputting the new value of *Count$_P$* into Equation 2, and the PRACH transmission power level $P_{PRACH}$ can be determined by Equation 3.

At operation 310 the apparatus 200 is configured to receive a third PDCCH order associated with the first cell, where the third PDCCH order indicates a second DL RS, and where the third PDCCH order comprises a PRACH transmission index value describing that a PRACH transmission is a retransmission. In various embodiments, there are three main alternatives the power ramping model can be configured to execute upon a first determination that a UE has received multiple PDCCH orders indicating a retransmission for one or more DL RSs (e.g., as indicated by a DL RS index and/or a SSB index associated with the multiple PDCCH orders), where the multiple PDCCH orders are associated with a same cell. As illustrated in FIG(s). 3A-B, the three main alternatives (e.g., ALT(s). A-C associated with operations 312, 314, and 316 respectively) can be used to employ power ramping to determine a respective PRACH transmission power level $P_{PRACH}$.

At alternative option 312 the apparatus 200 is configured to set the RA preamble power ramping counter value to a most recent value associated with a PRACH transmission associated with the first DL RS and execute the power ramping model based on the third PDCCH order such that no power ramping is performed. For example, $Count_P$ can be maintained such that $Count_P = Count_P$. As such, the apparatus 200 can derive the path loss ($PL_P$) for the first DL RS associated with the first SSB by Equation 1, the updated RA preamble received target power ($P1$) can be derived by inputting the value of $Count_P$ into Equation 2, and the PRACH transmission power level $P_{PRACH}$ can be determined by Equation 3. Accordingly, the UE may apply power ramping (e.g., increment the RA preamble power ramping counter value) for any subsequent retransmissions for the PRACH preamble with a same target DL RS (e.g., the second target DL RS).

At alternative option 314 the apparatus 200 is configured to increment the RA preamble power ramping counter value from a most recent value associated with a PRACH transmission associated with the first DL RS related to the first SSB and execute the power ramping model based on the third PDCCH order such that power ramping is performed accordingly. For example, $Count_P$ can be incremented such that $Count_P = Count_P + 1$. As such, the apparatus 200 can derive the path loss ($PL_P$) for the first DL RS associated with the first SSB by Equation 1, the updated RA preamble received target power ($P1$) can be derived by inputting the new value of $Count_P$ into Equation 2, and the PRACH transmission power level $P_{PRACH}$ can be determined by Equation 3.

At alternative option 316 the apparatus 200 is configured to reset the RA preamble power ramping counter value to a predefined initial counter value and execute the power ramping model based on the third PDCCH order such that no power ramping is performed. For example, $Count_P$ can be reset such that $Count_P = 1$. As such, the apparatus 200 can derive the path loss ($PL_P$) for the first DL RS associated with the first SSB by Equation 1, the updated RA preamble received target power ($P1$) can be derived by inputting the new value of $Count_P$ into Equation 2, and the PRACH transmission power level $P_{PRACH}$ can be determined by Equation 3.

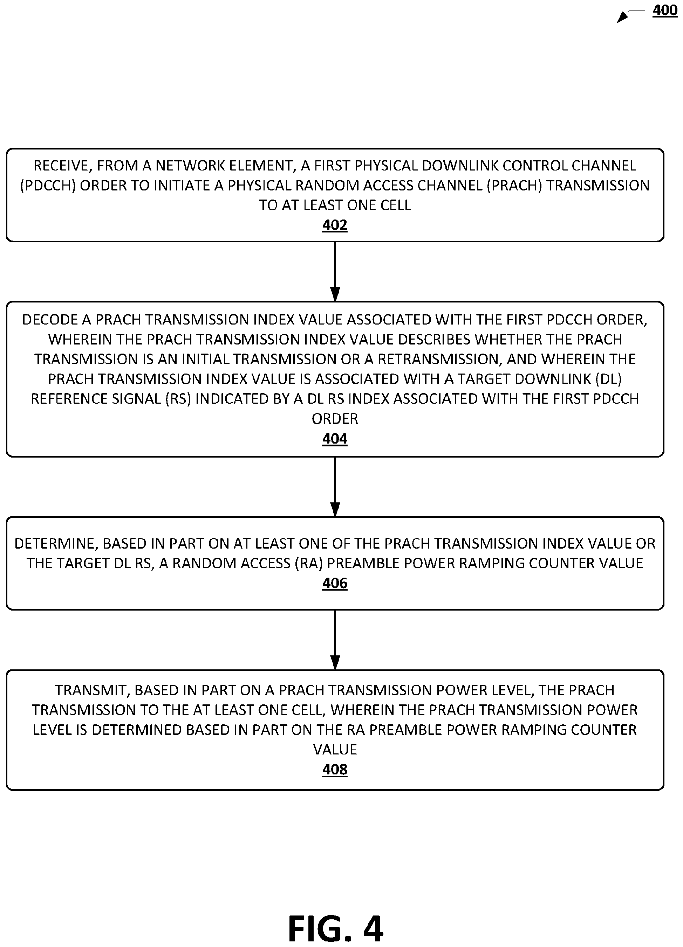

FIG. 4 illustrates a flowchart diagram depicting a method 400 for improved ordered PRACH transmission for a user equipment (UE) in accordance with one or more example embodiments of the present disclosure. The method 400 can be implemented, for example, by one or more components of an apparatus 200. In various embodiments the apparatus 200 can be embodied by a networking element (e.g., a gNB). In various other embodiments, the apparatus 200 can be embodied by a UE 102. Additionally or alternatively, the apparatus 200 can be embodied by any other particular computing device (e.g., smartphone, laptop, tablet computer, networking device, etc.) associated with a particular communications network. It will be appreciated that the apparatus 200 may be configured to perform the method 400 with the reference to the components of the apparatus 200 again being provided by way of example but not of limitation. As such, the apparatus 200 includes means, such as the processing circuitry 202, at least one processor, communication interface 204, at least one memory device 206, and/or the like, configured to perform the various operations associated with the method 400.

The method 400 begins at operation 402 in which the apparatus 200 is configured to receive, from a network element, a first PDCCH order to initiate a PRACH transmission to at least one cell.

At operation 404 the apparatus 200 is configured to decode a PRACH transmission index value associated with the first PDCCH order, where the PRACH transmission index value describes whether the PRACH transmission is an initial transmission or a retransmission, and where the PRACH transmission index value is associated with a target downlink (DL) reference signal (RS) indicated by a DL RS index associated with the first PDCCH order.

At operation 406 the apparatus 200 is configured to determine, based in part on at least one of the PRACH transmission index value or the target DL RS, an RA preamble power ramping counter value.

At operation 408 the apparatus 200 is configured to transmit, based in part on a PRACH transmission power level, the PRACH transmission to the at least one cell, wherein the PRACH transmission power level is determined based in part on the RA preamble power ramping counter value.

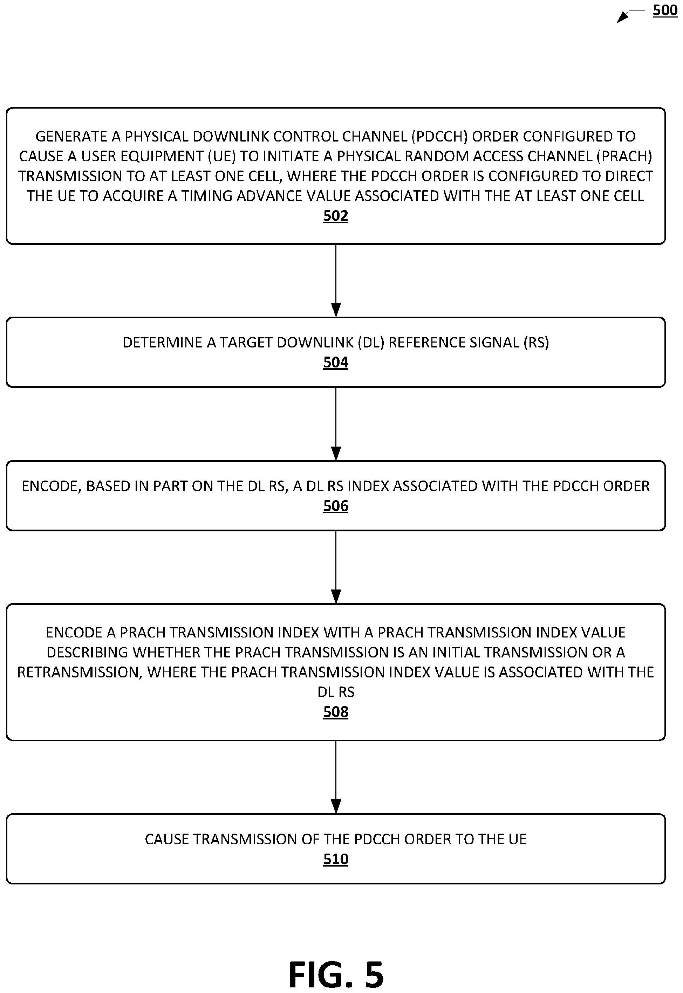

FIG. 5 illustrates a flowchart depicting a method 500 for improved ordered PRACH transmission for a network element in accordance with one or more example embodiments of the present disclosure. The method 500 can be implemented, for example, by one or more components of an apparatus 200. In various embodiments the apparatus 200 can be embodied by a networking element (e.g., a gNB). In various other embodiments, the apparatus 200 can be embodied by a UE 102. Additionally or alternatively, the apparatus 200 can be embodied by any other particular computing device (e.g., smartphone, laptop, tablet computer, networking device, etc.) associated with a particular communications network. It will be appreciated that the apparatus 200 may be configured to perform the method 500 with the reference to the components of the apparatus 200 again being provided by way of example but not of limitation. As such, the apparatus 200 includes means, such as the processing circuitry 202, at least one processor, communication interface 204, at least one memory device 206, and/or the like, configured to perform the various operations associated with the method 500.

The method 500 begins at operation 502 in which the apparatus 200 is configured to generate a PDCCH order configured to cause a UE to initiate a PRACH transmission to at least one cell (e.g., an LTM candidate cell 108), where the PDCCH order is configured to direct the UE to acquire a timing advance value associated with the at least one cell.

At operation 504 the apparatus 200 is configured to determine a target DL RS.

At operation 506 the apparatus 200 is configured to encode, based in part on the DL RS, a DL RS index associated with the PDCCH order.

At operation 508 the apparatus 200 is configured to encode a PRACH transmission index with a PRACH transmission index value describing whether the PRACH transmission is an initial transmission or a retransmission, where the PRACH transmission index value is associated with the DL RS.

At operation 510 the apparatus 200 is configured to cause transmission of the PDCCH order to the UE.

As described herein, an example embodiment of the present disclosure is able to provide improved PDCCH ordered PRACH transmission in LTM. Embodiments of the present disclosure provide a plurality of technical benefits that include reducing transmission latency, transmission overhead, and as well as mitigating network service downtime commonly associated with the traditional L3-based mobility management. In this regard, various embodiments provide techniques to enhance PDCCH ordered RACH transmission for multiple TA operations (e.g., for intra-cell and/or inter-cell TA operations) where in multiple TA values may be maintained for a serving cell. This process, known as early TA acquisition, allows embodiments to obtain a TA value for at least one candidate network cell (e.g., a target LTM candidate cell) prior to executing a cell switch command configured to switch the UE to the candidate cell from the current source cell (e.g., the serving cell) associated with the UE over to the candidate network cell. Furthermore, embodiments provide the technical benefit of reducing excess power consumption by one or more UEs by managing the power ramping performance associated with transmitting PRACH transmission to one or more cells associated with a communications network (e.g., a 5G, 6G, (or beyond) -type network) by the one or more UEs.

It should be appreciated that the example embodiments described herein are not restricted to the system that is given as an example, such as a 5G system, and that a person skilled in the art may apply the solution to other communication systems. Additionally, although described herein in the context of a UE performing, the method, the method may be performed by other types of apparatus, such as an apparatus associated with and/or in communication with a UE, in accordance with other example embodiments.

Furthermore, implementations of the various techniques described herein may be implemented in digital electronic circuitry, or in computer hardware, firmware, software, or in combinations of them. Implementations may be implemented as a computer program product, e.g., a computer program tangibly embodied in an information carrier, e.g., in a machine-readable storage device or in a propagated signal, for execution by, or to control the operation of, a data processing apparatus, e.g., a programmable processor, a computer, or multiple computers. Implementations may also be provided on a computer readable medium or computer readable storage medium, which may be a non-transitory medium. Implementations of the various techniques may also include implementations provided via transitory signals or media, and/or programs and/or software implementations that are downloadable via the Internet or other network(s), either wired networks and/or wireless networks.

The computer program may be in source code form, object code form, or in some intermediate form, and it may be stored in some sort of carrier, distribution medium, or computer readable medium, which may be any entity or device capable of carrying the program. Such carriers include a record medium, computer memory, read-only memory, photoelectrical and/or electrical carrier signal, telecommunications signal, and software distribution package, for example. Depending on the processing power needed, the computer program may be executed in a single electronic digital computer, or it may be distributed amongst a number of computers.

A computer program, such as the computer program(s) described herein, can be written in any form of programming language, including compiled or interpreted languages, and can be deployed in any form, including as a stand-alone program or as a module, component, subroutine, or other unit or part of it suitable for use in a computing environment. A computer program can be deployed to be executed on one computer or on multiple computers at one site or distributed across multiple sites and interconnected by a communication network.

Method steps may be performed by one or more programmable processors executing a computer program or computer program portions to perform functions by operating on input data and generating output. Method steps also may be performed by, and an apparatus may be implemented as, special purpose logic circuitry, e.g., an FPGA (field programmable gate array) or an ASIC (application-specific integrated circuit).

It will be understood that each block of the flowchart(s) and combination of blocks in the flowchart(s) can be implemented by various means, such as hardware, firmware, processor, circuitry, and/or other communication devices associated with execution of software including one or more computer program instructions. For example, one or more of the procedures described herein can be embodied by computer program instructions. In this regard, the computer program instructions which embody the procedures described herein can be stored, for example, by the memory device 206 of the apparatus 200 or other apparatus employing an embodiment of the present disclosure and executed by the processing circuitry 202. As will be appreciated, any such computer program instructions can be loaded onto a computer or other programmable apparatus (for example, hardware) to produce a machine, such that the resulting computer or other programmable apparatus implements the functions specified in the blocks of the flowchart(s). These computer program instructions can also be stored in a computer-readable memory that can direct a computer or other programmable apparatus to function in a particular manner, such that the instructions stored in the computer-readable memory produce an article of manufacture the execution of which implements the function specified in the blocks of the flowchart(s). The computer program instructions can also be loaded onto a computer or other programmable apparatus to cause a series of operations to be performed on the computer or other programmable apparatus to produce a computer-implemented process such that the instructions which execute on the computer or other programmable apparatus provide operations for implementing the functions specified in the blocks of the flowchart(s).

Accordingly, blocks of the flowchart(s) support combinations of means for performing the specified functions and combinations of operations for performing the specified functions for performing the specified functions. It will also be understood that one or more blocks of the flowchart(s), and combinations of blocks in the flowchart(s), can be implemented by special purpose hardware-based computer systems which perform the specified functions, or combinations of special purpose hardware and computer instructions.

In some embodiments, certain ones of the operations described herein may be modified or further amplified. Furthermore, in some embodiments, additional optional operations may be included. Modifications, additions, or amplifications to the operations described herein may be performed in any order and in any combination.

Many modifications and other embodiments of the present disclosure set forth herein will come to mind to one skilled in the art to which this disclosure pertains having the benefit of the teachings presented in the foregoing descriptions and the associated drawings. Therefore, it is to be understood that the present disclosure is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1.  An apparatus (102) comprising:

    at least one processor; and
    at least one memory including computer program code, the at least one memory and the computer program code configured to, with the at least one processor, cause the apparatus (102) at least to:
    receive, from a network element, a first physical downlink control channel, PDCCH, order to initiate a physical random access channel, PRACH, transmission to at least one cell, wherein the at least one cell comprises a Lower-Layer Triggered Mobility, LTM, candidate cell;
    decode a PRACH transmission index value associated with the first PDCCH order, wherein the PRACH transmission index value describes whether the PRACH transmission is an initial transmission or a retransmission, and wherein the PRACH transmission index value is associated with a target downlink, DL, reference signal, RS, indicated by a DL RS index associated with the first PDCCH order;
    determine, based in part on at least one of the PRACH transmission index value or the target DL RS, a random access, RA, preamble power ramping counter value; and
    transmit, based in part on a PRACH transmission power level, the PRACH transmission to the at least one cell, wherein the PRACH transmission power level is determined based in part on the RA preamble power ramping counter value, and wherein the PRACH transmission comprises at least an RA preamble,
    in response to determining that the PRACH transmission index value associated with the first PDCCH order indicates a retransmission associated with a first target DL RS,
    in response to determining that the apparatus (102) has performed at least one or more PRACH transmissions associated with the first target DL RS, and
    in response to receiving a second PDCCH order indicating a retransmission associated with a second target DL RS, wherein the second PDCCH order is associated with the same LTM candidate cell:
    set the RA preamble power ramping counter value to a most recent value associated with the at least one or more PRACH transmissions associated with the first target DL RS.

2.  The apparatus (102) of Claim 1, wherein the computer program code is configured to further cause the apparatus (102) at least to:

in response to determining that the PRACH transmission index value associated with the first PDCCH order indicates a retransmission associated with a first target DL RS, and

in response to determining that the apparatus (102) has not performed an initial PRACH transmission associated with the first target DL RS:

set the RA preamble power ramping counter value to a predefined initial counter value.

3. The apparatus (102) of Claim 1, wherein the computer program code is configured to further cause the apparatus (102) at least to:

in response to determining that the PRACH transmission index value associated with the first PDCCH order indicates a retransmission associated with a first target DL RS, and

in response to determining that the apparatus (102) has performed an initial PRACH transmission associated with the first target DL RS:

increment the RA preamble power ramping counter value to a predefined value associated with a first retransmission.

4. The apparatus (102) of Claim 1, wherein the first PDCCH order is configured in a downlink control information, DCI, format associated with one or more DCI data fields, wherein the one or more DCI data fields comprise data related to at least one of an indication of an LTM candidate cell identity, the DL RS index, a RACH occasion, an RA preamble index, the PRACH transmission index, or an RA response, RAR, configuration indication.

5. The apparatus (102) of Claim 1, wherein the first PDCCH order indicates that RAR is not configured.

6. The apparatus (102) of Claim 1, wherein an amount of active RA preamble power ramping counters that the apparatus (102) can maintain is determined by one or more computational capabilities associated with the apparatus (102), wherein the active RA preamble power ramping counters are associated with one or more respective PDCCH orders received by the apparatus (102).

7. The apparatus (102) of Claim 6, wherein the computer program code is configured to further cause the apparatus (102) at least to:

determine if the amount of active RA preamble power ramping counters associated with the apparatus (102) exceeds the one or more computational capabilities associated with the apparatus (102);

in response to determining the amount of active RA preamble power ramping counters associated with the apparatus (102) exceeds the one or more computational capabilities of the apparatus (102):

terminate an oldest active RA preamble power ramping counter associated with the active RA preamble power ramping counters.

8. The apparatus (102) of Claim 1, wherein the first PDCCH order is configured to direct the apparatus to acquire a timing advance value associated with the at least one cell, wherein the timing advance value is used for a cell switch procedure configured to switch the apparatus (102) to the at least one cell.

9. The apparatus (102) of Claim 1, wherein the PRACH transmission power level is determined based in part on inputting the RA preamble power ramping counter value into a power ramping model.

10. A computer-implemented method, the computer-implemented method comprising:

receiving, by a user equipment (102) from a network element (104), a first physical downlink control channel, PDCCH, order to initiate a physical random access channel, PRACH, transmission to at least one cell, wherein the at least one cell comprises a Lower-Layer Triggered Mobility, LTM, candidate cell;

decoding, by the user equipment (102), a PRACH transmission index value associated with the first PDCCH order, wherein the PRACH transmission index value describes whether the PRACH transmission is an initial transmission or a retransmission, and wherein the PRACH transmission index value is associated with a target downlink, DL, reference signal, RS, indicated by a DL RS index associated with the first PDCCH order;

determining, by the user equipment (102), based in part on at least one of the PRACH transmission index value or the target DL RS, a random access (RA) preamble power ramping counter value; and

transmitting, by the user equipment (102), based in part on a PRACH transmission power level, the PRACH transmission to the at least one cell, wherein the PRACH transmission power level is determined based in part on the RA preamble power ramping counter value,

in response to determining that the PRACH transmission index value associated with the first PDCCH order indicates a retransmission associated with a first target DL RS,

in response to determining that the user equipment (102) has performed at least one or more PRACH transmissions associated with the first target DL RS, and

in response to receiving a second PDCCH order indicating a retransmission associated with a second target DL RS, where the second PDCCH order is associated with the same LTM candidate cell,

setting, by the user equipment (102), the RA preamble power ramping counter value to a most recent value associated with the at least one or more PRACH transmissions associated with the first target DL RS.

11. The computer-implemented method according to claim 10, further comprising at least:

in response to determining that the PRACH transmission index value associated with the first PDCCH order indicates a retransmission associated with a first target DL RS, and

in response to determining that the user equipment (102) has not performed an initial PRACH transmission associated with the first target DL RS:

setting, by the user equipment (102), the RA preamble power ramping counter value to a predefined initial counter value.

12. The computer-implemented method according to claim 10, further comprising:

in response to determining that the PRACH transmission index value associated with the first PDCCH order indicates a retransmission associated with a first target DL RS, and

in response to determining that the user equipment (102) has performed an initial PRACH transmission associated with the first target DL RS:

incrementing, by the user equipment (102), the RA preamble power ramping counter value to a predefined value associated with a first retransmission.

13. The computer-implemented method according to claim 10, wherein the first PDCCH order is configured in a downlink control information, DCI, format associated with one or more DCI data fields, wherein the one or more DCI data fields comprise data related to at least one of an indication of an LTM candidate cell identity, the DL RS index, a RACH occasion, an RA preamble index, the PRACH transmission index, or an RA response, RAR, configuration indication.

14. The computer-implemented method according to claim 10, wherein an amount of active RA preamble power ramping counters that the user equipment (102) can maintain is determined by one or more computational capabilities associated with the user equipment (102), wherein the active RA preamble power ramping counters are associated with one or more respective PDCCH orders received by the user equipment (102).

15. The computer-implemented method according to claim 14, further comprising at least:

determining, by the user equipment (102), if the amount of active RA preamble power ramping counters associated with the user equipment (102) exceeds the one or more computational capabilities associated with the user equipment (102);

in response to determining the amount of active RA preamble power ramping counters associated with the user equipment (102) exceeds the one or more computational capabilities of the user equipment (102):

terminating, by the user equipment (102), an oldest active RA preamble power ramping counter associated with the active RA preamble power ramping counters.

## Patentansprüche

1. Einrichtung (102), die Folgendes umfasst:

mindestens einen Prozessor; und

mindestens einen Speicher, der Computerprogrammcode beinhaltet, wobei der mindestens eine Speicher und der Computerprogrammcode dazu ausgelegt sind, die Einrichtung (102) mit dem mindestens einen Prozessor mindestens zu Folgendem zu veranlassen:

Empfangen einer ersten physischen Downlinksteuerkanal, PDCCH, -Bestellung zum Initiieren einer physischen Direktzugriffskanal, PRACH, -Übertragung zu mindestens einer Zelle, von einem Netzwerkelement, wobei die mindestens eine Zelle einen Lower-Layer-Triggered-Mobility, LTM, - Zellenkandidaten umfasst;

Decodieren eines PRACH-Übertragungsindexwertes, der mit der ersten PDCCH-Bestellung verknüpft ist, wobei der PRACH-Übertragungsindexwert beschreibt, ob die PRACH-Übertragung eine Anfangsübertragung oder eine Neuübertragung ist, und wobei der PRACH-Übertragungsindexwert mit einem Zieldownlink, DL-Referenzsignal, RS, verknüpft ist, das von einem DL-RS-Index angezeigt wird, der mit der ersten PDCCH-Bestellung verknüpft ist;

Bestimmen eines Direktzugriffs, RA, - Präambelleistungsanpassungszählerwertes teilweise auf Basis von mindestens einem des PRACH-Übertragungsindexwertes oder des Ziel-DL-RS; und

Übertragen der PRACH-Übertragung teilweise auf Basis eines PRACH-Übertragungsleistungsniveaus zu der mindestens einen Zelle, wobei das PRACH-Übertragungsleistungsniveau teilweise auf Basis des RA-Präambelleistungsanpassungszählerwertes bestimmt wird, und wobei die PRACH-Übertragung mindestens eine RA-Präambel umfasst,

in Reaktion auf das Bestimmen, dass der PRACH-Übertragungsindexwert, der mit der ersten PDCCH-Bestellung verknüpft ist, eine Neuübertragung anzeigt, die mit dem ersten Ziel-DL-RS verknüpft ist,

in Reaktion auf das Bestimmen, dass die Einrichtung (102) mindestens eine oder mehrere PRACH-Übertragungen durchgeführt hat, die mit dem ersten Ziel-DL-RS verknüpft sind, und

in Reaktion auf das Empfangen einer zweiten PDCCH-Bestellung, die eine Neuübertragung anzeigt, die mit einem zweiten Ziel-DL-RS verknüpft ist, wobei die zweite PDCCH-Bestellung mit demselben LTM-Zellenkandidaten verknüpft ist:

Einstellen des RA-Präambelleistungsanpassungszählerwertes auf einen letzten Wert, der mit der mindestens einen oder den mehreren PRACH-Übertragungen verknüpft ist, die mit dem ersten Ziel-DL-RS verknüpft sind.

2. Einrichtung (102) nach Anspruch 1, wobei der Computerprogrammcode dazu ausgelegt ist, die Einrichtung (102) ferner mindestens zu Folgendem zu veranlassen:

in Reaktion auf das Bestimmen, dass der PRACH-Übertragungsindexwert, der mit der ersten PDCCH-Bestellung verknüpft ist, eine Neuübertragung anzeigt, die mit dem ersten Ziel-DL-RS verknüpft ist, und

in Reaktion auf das Bestimmen, dass die Einrichtung (102) keine PRACH-Anfangsübertragung durchgeführt hat, die mit dem ersten Ziel-DL-RS verknüpft ist:

Einstellen des RA-Präambelleistungsanpassungszählerwertes auf einen vordefinierten Anfangszählerwert.

3. Einrichtung (102) nach Anspruch 1, wobei der Computerprogrammcode dazu ausgelegt ist, die Einrichtung (102) ferner mindestens zu Folgendem zu veranlassen:

in Reaktion auf das Bestimmen, dass der PRACH-Übertragungsindexwert, der mit der ersten PDCCH-Bestellung verknüpft ist, eine Neuübertragung anzeigt, die mit dem ersten Ziel-DL-RS verknüpft ist, und

in Reaktion auf das Bestimmen, dass die Einrichtung (102) eine PRACH-Anfangsübertragung durchgeführt hat, die mit dem ersten Ziel-DL-RS verknüpft ist:

Erhöhen des RA-Präambelleistungsanpassungszählerwertes auf einen vordefinierten Wert, der mit einer ersten Neuübertragung verknüpft ist.

4. Einrichtung (102) nach Anspruch 1, wobei die erste PDCCH-Bestellung in einem Downlinksteuerinformations, DCI, - Format ausgelegt ist, das mit einem oder mehreren DCI-Datenfeldern verknüpft ist, wobei das eine oder die mehreren DCI-Datenfelder Daten umfassen, die sich auf mindestens eines von einer Anzeige einer LTM-Zellenkandidatidentität, dem DL-RS-Index, einer RACH-Gelegenheit, einem RA-Präambelindex, dem PRACH-Übertragungsindex oder einer RA-Antwort, RAR, - Auslegungsanzeige beziehen.

5. Einrichtung (102) nach Anspruch 1, wobei die erste PDCCH-Bestellung anzeigt, dass RAR nicht ausgelegt ist.

6. Einrichtung (102) nach Anspruch 1, wobei eine Menge von aktiven RA-Präambelleistungsanpassungszählern, die von der Einrichtung (102) gehalten werden können, von einer oder mehreren mit der Einrichtung (102) verknüpften Berechnungsfähigkeiten bestimmt wird, wobei die aktiven RA-Präambelleistungsanpassungszähler mit einer oder mehreren PDCCH-Bestellungen verknüpft sind, die von der Einrichtung (102) empfangen werden.

7. Einrichtung (102) nach Anspruch 6, wobei der Computerprogrammcode dazu ausgelegt ist, die Einrichtung (102) ferner mindestens zu Folgendem zu veranlassen:

Bestimmen, ob die Menge von aktiven RA-Präambelleistungsanpassungszählern, die mit der Einrichtung (102) verknüpft sind, die eine oder die mehreren mit der Einrichtung (102) verknüpften Berechnungsfähigkeiten überschreitet;

in Reaktion auf das Bestimmen, dass die Menge von aktiven RA-Präambelleistungsanpassungszählern, die mit der Einrichtung (102) verknüpft sind, die eine oder die mehreren Berechnungsfähigkeiten der Einrichtung (102) überschreitet:

Beenden eines ältesten RA-Präambelleistungsanpassungszählers, der mit den aktiven RA-Präambelleistungsanpassungszählern verknüpft ist.

8. Einrichtung (102) nach Anspruch 1, wobei die erste PDCCH-Bestellung dazu ausgelegt ist, die Einrichtung anzuweisen, einen Timingvorlaufswert zu erfassen, der mit der mindestens einen Zelle verknüpft ist, wobei der Timingvorlaufswert für eine Zellenumschaltprozedur verwendet wird, die dazu ausgelegt ist, die Einrichtung (102) auf die mindestens eine Zelle umzuschalten.

9. Einrichtung (102) nach Anspruch 1, wobei das PRACH-Übertragungsleistungsniveau teilweise auf Basis des Eingebens des RA-Präambelleistungsanpassungszählerwertes in ein Leistungsanpassungsmodell bestimmt wird.

10. Computerimplementiertes Verfahren, wobei das computerimplementierte Verfahren Folgendes umfasst:

Empfangen einer ersten physischen Downlinksteuerkanal, PDCCH, -Bestellung zum Initiieren einer physischen Direktzugriffskanal, PRACH, -Übertragung zu mindestens einer Zelle, durch eine Teilnehmereinrichtung (102) von einem Netzwerkelement (104), wobei die mindestens eine Zelle einen Lower-Layer-Triggered-Mobility, LTM, -Zellenkandidaten umfasst;

Decodieren eines PRACH-Übertragungsindexwertes, der mit der ersten PDCCH-Bestellung verknüpft ist, durch die Teilnehmereinrichtung (102), wobei der PRACH-Übertragungsindexwert beschreibt, ob die PRACH-Übertragung eine Anfangsübertragung oder eine Neuübertragung ist, und wobei der PRACH-Übertragungsindexwert mit einem Zieldownlink, DL, - Referenzsignal, RS, verknüpft ist, das von einem DL-RS-Index angezeigt wird, der mit der ersten PDCCH-Bestellung verknüpft ist;

Bestimmen eines Direktzugriffs, RA, - Präambelleistungsanpassungszählerwertes durch die Teilnehmereinrichtung (102) teilweise auf Basis von mindestens einem des PRACH-Übertragungsindexwertes oder des Ziel-DL-RS; und

Übertragen der PRACH-Übertragung durch die Teilnehmereinrichtung (102) teilweise auf Basis eines PRACH-Übertragungsleistungsniveaus zu der mindestens einen Zelle, wobei das PRACH-Übertragungsleistungsniveau teilweise auf Basis des RA-Präambelleistungsanpassungszählerwertes bestimmt wird,

in Reaktion auf das Bestimmen, dass der PRACH-Übertragungsindexwert, der mit der ersten PDCCH-Bestellung verknüpft ist, eine Neuübertragung anzeigt, die mit dem ersten Ziel-DL-RS verknüpft ist,

in Reaktion auf das Bestimmen, dass die Teilnehmereinrichtung (102) mindestens eine oder mehrere PRACH-Übertragungen durchgeführt hat, die mit dem ersten Ziel-DL-RS verknüpft sind, und

in Reaktion auf das Empfangen einer zweiten PDCCH-Bestellung, die eine Neuübertragung anzeigt, die mit einem zweiten Ziel-DL-RS verknüpft ist, wo die zweite PDCCH-Bestellung mit demselben LTM-Zellenkandidaten verknüpft ist,

Einstellen des RA-Präambelleistungsanpassungszählerwertes durch die Teilnehmereinrichtung (102) auf einen letzten Wert, der mit der mindestens einen oder den mehreren PRACH-Übertragungen verknüpft ist, die mit dem ersten Ziel-DL-RS verknüpft sind.

11. Computerimplementiertes Verfahren gemäß Anspruch 10, das ferner mindestens Folgendes umfasst:

in Reaktion auf das Bestimmen, dass der PRACH-Übertragungsindexwert, der mit der ersten PDCCH-Bestellung verknüpft ist, eine Neuübertragung anzeigt, die mit dem ersten Ziel-DL-RS verknüpft ist, und

in Reaktion auf das Bestimmen, dass die Teilnehmereinrichtung (102) keine PRACH-Anfangsübertragung durchgeführt hat, die mit dem ersten Ziel-DL-RS verknüpft ist:

Einstellen des RA-Präambelleistungsanpassungszählerwertes durch die Teilnehmereinrichtung (102) auf einen vordefinierten Anfangszählerwert.

12. Computerimplementiertes Verfahren nach Anspruch 10, das ferner Folgendes umfasst:

in Reaktion auf das Bestimmen, dass der PRACH-Übertragungsindexwert, der mit der ersten PDCCH-Bestellung verknüpft ist, eine Neuübertragung anzeigt, die mit dem ersten Ziel-DL-RS verknüpft ist, und

in Reaktion auf das Bestimmen, dass die Teilnehmereinrichtung (102) eine PRACH-Anfangsübertragung durchgeführt hat, die mit dem ersten Ziel-DL-RS verknüpft ist:

Erhöhen des RA-Präambelleistungsanpassungszählerwertes durch die Teilnehmereinrichtung (102) auf einen vordefinierten Wert, der mit einer ersten Neuübertragung verknüpft ist.

13. Computerimplementiertes Verfahren gemäß Anspruch 10, wobei die erste PDCCH-Bestellung in einem Downlinksteuerinformations, DCI, -Format ausgelegt ist, das mit einem oder mehreren DCI-Datenfeldern verknüpft ist, wobei das eine oder die mehreren DCI-Datenfelder Daten umfassen, die sich auf mindestens eines von einer Anzeige einer LTM-Zellenkandidatidentität, dem DL-RS-Index, einer RACH-Gelegenheit, einem RA-Präambelindex, dem PRACH-Übertragungsindex oder einer RA-Antwort, RAR, - Auslegungsanzeige beziehen.

14. Computerimplementiertes Verfahren gemäß Anspruch 10, wobei eine Menge von aktiven RA-Präambelleistungsanpassungszählern, die von der Teilnehmereinrichtung (102) gehalten werden können, von einer oder mehreren mit der Teilnehmereinrichtung (102) verknüpften Berechnungsfähigkeiten bestimmt wird, wobei die aktiven RA-Präambelleistungsanpassungszähler mit einer oder mehreren PDCCH-Bestellungen verknüpft sind, die von der Teilnehmereinrichtung (102) empfangen werden.

15. Computerimplementiertes Verfahren gemäß Anspruch 14, das ferner mindestens Folgendes umfasst:

Bestimmen durch die Teilnehmereinrichtung (102), ob die Menge von aktiven RA-Präambelleistungsanpassungszählern, die mit der Teilnehmereinrichtung (102) verknüpft sind, die eine oder die mehreren mit der Teilnehmereinrichtung (102) verknüpften Berechnungsfähigkeiten überschreitet;

in Reaktion auf das Bestimmen, dass die Menge von aktiven RA-Präambelleistungsanpassungszählern, die mit der Teilnehmereinrichtung (102) verknüpft sind, die eine oder die mehreren Berechnungsfähigkeiten der Teilnehmereinrichtung (102) überschreitet:

Beenden eines ältesten RA-Präambelleistungsanpassungszählers, der mit den aktiven RA-Präambelleistungsanpassungszählern verknüpft ist, durch die Teilnehmereinrichtung (102).

## Revendications

1. Appareil (102) comprenant :

au moins un processeur ; et
au moins une mémoire comportant un code de programme informatique, l'au moins une mémoire et le code de programme informatique étant configurés pour, avec l'au moins un processeur, amener l'appareil (102) à au moins :

recevoir d'un élément de réseau un premier ordre de canal physique de contrôle de liaison descendante, PDCCH, pour initier une transmission de canal physique d'accès aléatoire, PRACH, à au moins une cellule, dans lequel l'au moins une cellule comprend une cellule candidate de mobilité déclenchée par couche inférieure, LTM ;

décoder une valeur d'indice de transmission PRACH associée au premier ordre PDCCH, dans lequel la valeur d'indice de transmission PRACH décrit si la transmission PRACH est une transmission initiale ou une retransmission, et dans lequel la valeur d'indice de transmission PRACH est associée à un signal de référence, RS, de liaison descendante, DL, cible indiqué par un indice RS DL associé au premier ordre PDCCH ;

en se basant au moins en partie sur au moins un parmi la valeur d'indice de transmission PRACH ou le RS DL cible, déterminer une valeur de compteur de montée en puissance de préambule d'accès aléatoire, RA ; et

en se basant au moins en partie sur un niveau de puissance de transmission PRACH, effectuer la transmission PRACH à l'au moins une cellule, dans lequel le niveau de puissance de transmission PRACH est déterminé en se basant au moins en partie sur la valeur de compteur de montée en puissance de préambule RA, et dans lequel la transmission PRACH comprend au moins un préambule RA,

en réponse à la détermination de l'indication, par la valeur d'indice de transmission PRACH associée au premier ordre PDCCH, d'une retransmission associée à un premier RS DL cible,

en réponse à la détermination de la réalisation, par l'appareil (102), d'au moins une ou plusieurs transmissions PRACH associées au premier RS DL cible, et

en réponse à la réception d'un deuxième ordre PDCCH indiquant une retransmission associée à un deuxième RS DL cible, le deuxième ordre PDCCH étant associé à la même cellule candidate LTM :

fixer la valeur de compteur de montée en puissance de préambule RA à la valeur la plus récente associée à l'au moins une ou plusieurs transmissions PRACH associées au premier RS DL cible.

2. Appareil (102) selon la revendication 1, dans lequel le code de programme informatique est configuré pour amener en outre l'appareil (102) à au moins :

en réponse à la détermination de l'indication, par la valeur d'indice de transmission PRACH associée au premier ordre PDCCH, d'une retransmission associée à un premier RS DL cible, et

en réponse à la détermination de la non réalisation, par l'appareil (102), d'une transmission PRACH initiale associée au premier RS DL cible :

fixer la valeur de compteur de montée en puissance de préambule RA à une valeur de compteur initiale prédéfinie.

3. Appareil (102) selon la revendication 1, dans lequel le code de programme informatique est configuré pour amener en outre l'appareil (102) à au moins :

en réponse à la détermination de l'indication, par la valeur d'indice de transmission PRACH associée au premier ordre PDCCH, d'une retransmission associée à un premier RS DL cible, et

en réponse à la détermination de la réalisation, par l'appareil (102), d'une transmission PRACH initiale associée au premier RS DL cible :

incrémenter la valeur de compteur de montée en puissance de préambule RA à une valeur prédéfinie associée à une première retransmission.

4. Appareil (102) selon la revendication 1, dans lequel le premier ordre PDCCH est configuré dans un format d'informations de contrôle de liaison descendante, DCI, associé à un ou plusieurs champs de données DCI, les un ou plusieurs champs de données DCI comprenant des données relatives à au moins un parmi une indication d'une identité de cellule candidate LTM, l'indice RS DL, une occasion RACH, un indice de préambule RA, l'indice de transmission PRACH, ou une indication de configuration de réponse RA, RAR.

5. Appareil (102) selon la revendication 1, dans lequel le premier ordre PDCCH indique que le RAR n'est pas configuré.

6. Appareil (102) selon la revendication 1, dans lequel une quantité de compteurs de montée en puissance de préambule RA actifs que l'appareil (102) peut maintenir est déterminée par une ou plusieurs capacités de calcul associées à l'appareil (102), dans lequel les compteurs de montée en puissance de préambule RA actifs sont associés à un ou plusieurs ordres PDCCH respectifs reçus par l'appareil (102).

7. Appareil (102) selon la revendication 6, dans lequel le code de programme informatique est configuré pour amener en outre l'appareil (102) à au moins :

déterminer si la quantité de compteurs de montée en puissance de préambule RA actifs associée à l'appareil (102) dépasse les une ou plusieurs capacités de calcul associées à l'appareil (102) ;

en réponse à la détermination du dépassement, par la quantité de compteurs de montée en puissance de préambule RA actifs associée à l'appareil (102), des une ou plusieurs capacités de calcul de l'appareil (102) :

mettre fin au plus ancien compteur de montée en puissance de préambule RA actif associé aux compteurs de montée en puissance de préambule RA actifs.

8. Appareil (102) selon la revendication 1, dans lequel le premier ordre PDCCH est configuré pour ordonner à l'appareil d'acquérir une valeur d'avance temporelle associée à l'au moins une cellule, dans lequel la valeur d'avance temporelle est utilisée pour une procédure de commutation de cellule configurée pour commuter l'appareil (102) sur l'au moins une cellule.

9. Appareil (102) selon la revendication 1, dans lequel le niveau de puissance de transmission PRACH est déterminé en se basant au moins en partie sur l'entrée de la valeur de compteur de montée en puissance de préambule RA dans un modèle de montée en puissance.

**10.** Procédé mis en œuvre par ordinateur, le procédé mis en œuvre par ordinateur comprenant les étapes suivantes :

par un équipement utilisateur (102), recevoir d'un élément de réseau (104) un premier ordre de canal physique de contrôle de liaison descendante, PDCCH, pour initier une transmission de canal physique d'accès aléatoire, PRACH, à au moins une cellule, dans lequel l'au moins une cellule comprend une cellule candidate de mobilité déclenchée par couche inférieure, LTM ;

par l'équipement utilisateur (102), décoder une valeur d'indice de transmission PRACH associée au premier ordre PDCCH, dans lequel la valeur d'indice de transmission PRACH décrit si la transmission PRACH est une transmission initiale ou une retransmission, et dans lequel la valeur d'indice de transmission PRACH est associée à un signal de référence, RS, de liaison descendante, DL, cible indiqué par un indice RS DL associé au premier ordre PDCCH ;

par l'équipement utilisateur (102), en se basant au moins en partie sur au moins un parmi la valeur d'indice de transmission PRACH ou le RS DL cible, déterminer une valeur de compteur de montée en puissance de préambule d'accès aléatoire, RA ; et

par l'équipement utilisateur (102), en se basant au moins en partie sur un niveau de puissance de transmission PRACH, effectuer la transmission PRACH à l'au moins une cellule, dans lequel le niveau de puissance de transmission PRACH est déterminé en se basant au moins en partie sur la valeur de compteur de montée en puissance de préambule RA,

en réponse à la détermination de l'indication, par la valeur d'indice de transmission PRACH associée au premier ordre PDCCH, d'une retransmission associée à un premier RS DL cible,

en réponse à la détermination de la réalisation, par l'équipement utilisateur (102), d'au moins une ou plusieurs transmissions PRACH associées au premier RS DL cible, et

en réponse à la réception d'un deuxième ordre PDCCH indiquant une retransmission associée à un deuxième RS DL cible, le deuxième ordre PDCCH étant associé à la même cellule candidate LTM,

par l'équipement utilisateur (102), fixer la valeur de compteur de montée en puissance de préambule RA à la valeur la plus récente associée à l'au moins une ou plusieurs transmissions PRACH associées au premier RS DL cible.

**11.** Procédé mis en œuvre par ordinateur selon la revendication 10, comprenant en outre au moins les étapes suivantes :

en réponse à la détermination de l'indication, par la valeur d'indice de transmission PRACH associée au premier ordre PDCCH, d'une retransmission associée à un premier RS DL cible, et

en réponse à la détermination de la non réalisation, par l'équipement utilisateur (102), d'une transmission PRACH initiale associée au premier RS DL cible :

par l'équipement utilisateur (102), fixer la valeur de compteur de montée en puissance de préambule RA à une valeur de compteur initiale prédéfinie.

**12.** Procédé mis en œuvre par ordinateur selon la revendication 10, comprenant en outre les étapes suivantes :

en réponse à la détermination de l'indication, par la valeur d'indice de transmission PRACH associée au premier ordre PDCCH, d'une retransmission associée à un premier RS DL cible, et

en réponse à la détermination de la réalisation, par l'équipement utilisateur (102), d'une transmission PRACH initiale associée au premier RS DL cible :

par l'équipement utilisateur (102), incrémenter la valeur de compteur de montée en puissance de préambule RA à une valeur prédéfinie associée à une première retransmission.

**13.** Procédé mis en œuvre par ordinateur selon la revendication 10, dans lequel le premier ordre PDCCH est configuré dans un format d'informations de contrôle de liaison descendante, DCI, associé à un ou plusieurs champs de données DCI, les un ou plusieurs champs de données DCI comprenant des données relatives à au moins un parmi une indication **d'une** identité de cellule candidate LTM, l'indice RS DL, une occasion RACH, un indice de préambule RA, l'indice de transmission PRACH, ou une indication de configuration de réponse RA, RAR.

**14.** Procédé mis en œuvre par ordinateur selon la revendication 10, dans lequel une quantité de compteurs de montée en puissance de préambule RA actifs que l'équipement utilisateur (102) peut maintenir est déterminée par une ou plusieurs capacités de calcul associées à l'équipement utilisateur (102), dans lequel les compteurs de montée en puissance de préambule RA actifs sont associés à un ou plusieurs ordres PDCCH respectifs reçus par l'équipement utilisateur (102).

**15.** Procédé mis en œuvre par ordinateur selon la revendication 14, comprenant en outre au moins les étapes suivantes :

par l'équipement utilisateur (102), déterminer si la quantité de compteurs de montée en puissance de préambule RA actifs associée à l'équipement utilisateur (102) dépasse les une ou plusieurs capacités de calcul associées à l'équipement utilisateur (102) ;

en réponse à la détermination du dépassement, par la quantité de compteurs de montée en puissance de préambule RA actifs associée à l'équipement utilisateur (102) dépasse les une ou plusieurs capacités de calcul de l'équipement utilisateur (102) :

par l'équipement utilisateur (102), mettre fin au plus ancien compteur de montée en puissance de préambule RA actif associé aux compteurs de montée en puissance de préambule RA actifs.

**FIG. 1**

200

```
┌─────────────────────┐              ┌─────────────────────┐
│                     │              │                     │
│    PROCESSING       │◄────────────►│   COMMUNICATION     │
│     CIRCUITRY       │              │     INTERFACE       │
│       202           │              │        204          │
│                     │              │                     │
└─────────────────────┘              └─────────────────────┘
          ▲
          │
          ▼
┌─────────────────────┐
│                     │
│      MEMORY         │
│      DEVICE         │
│       206           │
│                     │
└─────────────────────┘
```

# FIG. 2

300

RECEIVE A FIRST PHYSICAL DOWNLINK CONTROL CHANNEL (PDCCH) ORDER ASSOCIATED WITH A FIRST CELL, WHERE THE FIRST PDCCH ORDER INDICATES A FIRST DOWNLINK (DL) REFERENCE SIGNAL (RS), AND WHERE THE FIRST PDCCH ORDER COMPRISES A PRACH TRANSMISSION INDEX VALUE DESCRIBING THAT A PHYSICAL RANDOM ACCESS CHANNEL (PRACH) TRANSMISSION IS AN INITIAL TRANSMISSION
302

EXECUTE A POWER RAMPING MODEL BASED IN PART ON THE FIRST PDCCH ORDER AND A PREDEFINED RA PREAMBLE POWER RAMPING COUNTER VALUE
304

RECEIVE A SECOND PDCCH ORDER ASSOCIATED WITH THE FIRST CELL, WHERE THE SECOND PDCCH ORDER INDICATES THE FIRST DL RS, AND WHERE THE SECOND PDCCH ORDER COMPRISES A PRACH TRANSMISSION INDEX VALUE DESCRIBING THAT A PRACH TRANSMISSION IS A RETRANSMISSION
306

INCREMENT THE RA PREAMBLE POWER RAMPING COUNTER VALUE TO A PREDEFINED VALUE ASSOCIATED WITH A FIRST REPEATED TRANSMISSION AND EXECUTE THE POWER RAMPING MODEL BASED IN PART ON THE FIRST PDCCH ORDER AND THE RA PREAMBLE POWER RAMPING VALUE
308

RECEIVE A THIRD PDCCH ORDER ASSOCIATED WITH THE FIRST CELL, WHERE THE THIRD PDCCH ORDER INDICATES A SECOND DL RS, AND WHERE THE THIRD PDCCH ORDER COMPRISES A PRACH TRANSMISSION INDEX VALUE DESCRIBING THAT A PRACH TRANSMISSION IS A RETRANSMISSION
310

ALT. A

ALT. B

ALT. C

FIG. 3A

ALT. A

SET THE RA PREAMBLE POWER RAMPING COUNTER VALUE TO A MOST RECENT VALUE ASSOCIATED WITH A PRACH TRANSMISSION ASSOCIATED WITH THE FIRST DL RS AND EXECUTE THE POWER RAMPING MODEL BASED ON THE THIRD PDCCH ORDER SUCH THAT NO POWER RAMPING IS PERFORMED
312

ALT. B

INCREMENT THE RA PREAMBLE POWER RAMPING COUNTER VALUE FROM A MOST RECENT VALUE ASSOCIATED WITH A PRACH TRANSMISSION ASSOCIATED WITH THE FIRST DL RS AND EXECUTE THE POWER RAMPING MODEL BASED ON THE THIRD PDCCH ORDER SUCH THAT POWER RAMPING IS PERFORMED ACCORDINGLY
314

ALT. C

RESET THE RA PREAMBLE POWER RAMPING COUNTER VALUE TO A PREDEFINED INITIAL COUNTER VALUE AND EXECUTE THE POWER RAMPING MODEL BASED ON THE THIRD PDCCH ORDER SUCH THAT NO POWER RAMPING IS PERFORMED
316

# FIG. 3B

400

RECEIVE, FROM A NETWORK ELEMENT, A FIRST PHYSICAL DOWNLINK CONTROL CHANNEL (PDCCH) ORDER TO INITIATE A PHYSICAL RANDOM ACCESS CHANNEL (PRACH) TRANSMISSION TO AT LEAST ONE CELL
402

DECODE A PRACH TRANSMISSION INDEX VALUE ASSOCIATED WITH THE FIRST PDCCH ORDER, WHEREIN THE PRACH TRANSMISSION INDEX VALUE DESCRIBES WHETHER THE PRACH TRANSMISSION IS AN INITIAL TRANSMISSION OR A RETRANSMISSION, AND WHEREIN THE PRACH TRANSMISSION INDEX VALUE IS ASSOCIATED WITH A TARGET DOWNLINK (DL) REFERENCE SIGNAL (RS) INDICATED BY A DL RS INDEX ASSOCIATED WITH THE FIRST PDCCH ORDER
404

DETERMINE, BASED IN PART ON AT LEAST ONE OF THE PRACH TRANSMISSION INDEX VALUE OR THE TARGET DL RS, A RANDOM ACCESS (RA) PREAMBLE POWER RAMPING COUNTER VALUE
406

TRANSMIT, BASED IN PART ON A PRACH TRANSMISSION POWER LEVEL, THE PRACH TRANSMISSION TO THE AT LEAST ONE CELL, WHEREIN THE PRACH TRANSMISSION POWER LEVEL IS DETERMINED BASED IN PART ON THE RA PREAMBLE POWER RAMPING COUNTER VALUE
408

# FIG. 4

*500*

GENERATE A PHYSICAL DOWNLINK CONTROL CHANNEL (PDCCH) ORDER CONFIGURED TO CAUSE A USER EQUIPMENT (UE) TO INITIATE A PHYSICAL RANDOM ACCESS CHANNEL (PRACH) TRANSMISSION TO AT LEAST ONE CELL, WHERE THE PDCCH ORDER IS CONFIGURED TO DIRECT THE UE TO ACQUIRE A TIMING ADVANCE VALUE ASSOCIATED WITH THE AT LEAST ONE CELL
**502**

DETERMINE A TARGET DOWNLINK (DL) REFERENCE SIGNAL (RS)
**504**

ENCODE, BASED IN PART ON THE DL RS, A DL RS INDEX ASSOCIATED WITH THE PDCCH ORDER
**506**

ENCODE A PRACH TRANSMISSION INDEX WITH A PRACH TRANSMISSION INDEX VALUE DESCRIBING WHETHER THE PRACH TRANSMISSION IS AN INITIAL TRANSMISSION OR A RETRANSMISSION, WHERE THE PRACH TRANSMISSION INDEX VALUE IS ASSOCIATED WITH THE DL RS
**508**

CAUSE TRANSMISSION OF THE PDCCH ORDER TO THE UE
**510**

# FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PATRICK MERIAS et al.** Moderator summary on Timing advance management for LTM: Round 4. *3GPP draft R1-2304135; NR_MOB_ENH2-CORE*, vol. 3GPP RAN 1

- **XIN SU**. LS on beam indication of target cell(s) and time gap between a PDCCH order and the corresponding PRACH transmission for LTM. *3GPP DRAFT; R2-2304620*, vol. RAN WG2